(19) Europäisches Patentamt
European Patent Office
Office européen des brevets

(11) **EP 4 773 554 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
**H04L 25/02** (2006.01)

(21) Application number: 24883794.0

(22) Date of filing: 09.04.2024

(52) Cooperative Patent Classification (CPC):
**H04L 25/02**

(86) International application number:
**PCT/CN2024/086758**

(87) International publication number:
**WO 2025/091779 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 30.10.2023 CN 202311435559

(71) Applicant: ZTE Corporation
Shenzhen, Guangdong 518057 (CN)

(72) Inventors:
• LI, Xiaofan
Shenzhen, Guangdong 518057 (CN)
• LIN, Wei
Shenzhen, Guangdong 518057 (CN)
• RUI, Hua
Shenzhen, Guangdong 518057 (CN)
• ZHANG, Yuxuan
Shenzhen, Guangdong 518057 (CN)

(74) Representative: Ziebig Hengelhaupt Intellectual Property Attorneys
Patentanwaltskanzlei PartGmbB
Leipziger Straße 49
10117 Berlin (DE)

(54) **COMMUNICATION METHOD, COMMUNICATION DEVICE AND STORAGE MEDIUM**

(57) Embodiments of the present disclosure relate to the technical field of communications, and provide a communication method, a communication device and a storage medium, used for improving the data transmission efficiency during communication. The method comprises: receiving a first communication signal without a pilot symbol; processing the first communication signal by means of a first model to obtain a second communication signal; and performing signal parsing processing on the second communication signal to obtain communication data.

```
┌─────────────────────────────────────────────┐
│ Receive a first communication signal without │ ~S101
│ a pilot symbol                                │
└─────────────────────────────────────────────┘
                      │
                      ▼
┌─────────────────────────────────────────────┐
│ Process the first communication signal by    │ ~S102
│ means of a first model to obtain a second     │
│ communication signal                          │
└─────────────────────────────────────────────┘
                      │
                      ▼
┌─────────────────────────────────────────────┐
│ Perform signal parsing processing on the      │ ~S103
│ second communication signal to obtain         │
│ communication data                            │
└─────────────────────────────────────────────┘
```

FIG. 2

## Description

The present disclosure claims priority to a Chinese Patent Application No. 202311435559.2, filed on October 30, 2023, the entire content of which is incorporated herein by reference.

TECHNICAL FIELD

The present disclosure relates to the field of communication technologies, and in particular, to a communication method, a communication apparatus, and a storage medium.

BACKGROUND

In a wireless mobile communication system, fading of a wireless channel causes severe distortion of a transmission signal. In order to accurately recover the transmission signal from a transmitting side at a receiving side, the wireless mobile communication system generally performs channel estimation by transmitting a pilot symbol, to acquire accurate channel state information (CSI), and then, the acquired channel state information is utilized to perform channel equalization to eliminate distortion of the signal waveform caused by the channel. The pilot-based channel estimation method includes a maximum likelihood (ML) estimation algorithm, a least squares (LS) channel estimation algorithm, a minimum mean square error (MMSE) channel estimation algorithm, and a compressed sensing (CS)-based channel estimation algorithm, etc. In this way, the transmitting side needs to transmit a pilot signal, which generates pilot overhead, thereby resulting in a reduction in communication efficiency.

SUMMARY

The present disclosure provides a communication method, a communication apparatus, and a storage medium, for improving data transmission efficiency in a communication process.
To achieve the above objective, the present disclosure adopts the following technical solution.
In a first aspect, the present disclosure provides a communication method, and the method includes:

receiving a first communication signal without a pilot symbol;
processing the first communication signal through a first model to obtain a second communication signal; and
performing signal parsing processing on the second communication signal to obtain communication data.

In a second aspect, a communication apparatus is provided, and the apparatus includes: a receiving module and a processing module.
The receiving module is configured to receive a first communication signal without a pilot symbol.
The processing module is configured to process the first communication signal through a first model to obtain a second communication signal.
The processing module is further configured to perform signal parsing processing on the second communication signal to obtain communication data.
In a third aspect, a communication apparatus is provided, including: a memory and a processor; the memory is coupled with the processor; the memory is configured to store computer program instructions executable by the processor; the processor, upon executing the computer program instructions, implements the method of the first aspect described above.
In a fourth aspect, a computer-readable storage medium is provided, the computer-readable storage medium stores computer program instructions, and the computer program instructions, upon running on a computer (e.g., a communication apparatus), implement the method of the first aspect described above.
In a fifth aspect, a computer program product is provided, the computer program product includes computer program instructions, and the computer program instructions, upon being executed, implement the method of the first aspect described above.
Based on the technical solution provided in the present disclosure, all symbols in the communication process may be used to transmit data, which improves data transmission efficiency. Moreover, the technical solution adopts a low-speed receiver (first model) architecture based on a cascaded neural network, and based on this architecture, the received communication signal without a pilot symbol may be processed, which can more accurately reflect channel impacts, and further improve signal detection performance of the receiver.
In addition, the technical solution provided in the present disclosure adopts a receiver (first model) with a neural network structure that may be driven by both data and model, which may take linearly-computed data as training data input to the first model, thereby reducing the sample quantity required for training and the duration required for training.

BRIEF DESCRIPTION OF THE DRAWINGS

FIG. 1 is an architectural schematic diagram of a communication system provided in the embodiments of the present disclosure.

FIG. 2 is a schematic flowchart of a communication method provided in the embodiments of the present disclosure.

FIG. 3 is a schematic diagram of a symbol provided in the embodiments of the present disclosure.

FIG. 4 is a schematic diagram of a data processing process provided in the embodiments of the present disclosure.

FIG. 5 is a schematic flowchart of another communication method provided in the embodiments of the present disclosure.

FIG. 6 is a schematic flowchart of another communication method provided in the embodiments of the present disclosure.

FIG. 7 is a schematic diagram of a data processing process of a receiver provided in the embodiments of the present disclosure.

FIG. 8 is a schematic flowchart of another communication method provided in the embodiments of the present disclosure.

FIG. 9 is a schematic diagram of another symbol provided in the embodiments of the present disclosure.

FIG. 10 is a schematic flowchart of another communication method provided in the embodiments of the present disclosure.

FIG. 11 is a composition schematic diagram of a communication apparatus provided in the embodiments of the present disclosure.

FIG. 12 is a structural schematic diagram of a communication apparatus provided in the embodiments of the present disclosure.

DETAILED DESCRIPTION

The technical solution in the embodiments of the present disclosure will be described clearly and completely below in conjunction with the drawings in the embodiments of the present disclosure, and obviously, the described embodiments are only a part of the embodiments of the present disclosure, rather than all of the embodiments. Based on the embodiments in the present disclosure, all other embodiments obtained by those ordinary skilled in the art without creative efforts shall fall within the scope of protection of the present disclosure.

In the description of the present disclosure, unless otherwise specified, "/" means "or", and for example, A/B may mean A or B. The "and/or" herein is merely a description of an association relationship between associated objects, indicating that three relationships may exist, and for example, A and/or B may indicate three cases where: A exists alone, A and B exist simultaneously, and B exists alone. Furthermore, "at least one" means one or more, and "multiple/plurality of" means two or more. The terms such as "first" and "second" do not limit the number and execution order, and the terms such as "first" and "second" do not necessarily indicate different items.

It should be noted that, in the present disclosure, terms such as "exemplary/exemplarily" or "for example/such as/e.g." are used to indicate examples, explanations, or illustrations. Any embodiment or design solution described with "exemplary/exemplarily" or "for example/such as/e.g." in the present disclosure should not be interpreted as being more preferred or advantageous than other embodiments or design solutions. To be precise, the use of terms such as "exemplary/exemplarily" or "for example/such as/e.g." is intended to present a related concept in a specific manner.

Since a wireless channel is not fixed and predictable like a wired channel, but has great randomness, the performance of the wireless communication system is largely affected by the wireless channel, such as shadow fading and frequency selective fading, etc. In order to accurately recover the transmission signal from the transmitting side at the receiving side, the receiving side generally adopts a channel equalization technology to compensate for channel fading. Currently, an orthogonal frequency division multiplexing (OFDM) receiver system generally utilizes a mathematical formula for signal detection. For example, the use of linear detection such as a zero-forcing algorithm and a minimum mean square error detection algorithm has low detection precision, and due to the complex channel environment, it is difficult to express with mathematical formulas, therefore this method is not applicable. The receiver corresponding to a non-linear detection method has high complexity. Furthermore, the use of a wireless communication technology based on a neural network architecture is also proposed, which may more accurately fit channel impacts and further improve detection performance. However, the transmitting side always needs to transmit a pilot signal to assist in acquiring accurate channel state information, thereby generating pilot overhead and resulting in a reduction in communication efficiency of the wireless mobile communication system.

In view of this, the present disclosure provides a communication method, and the method includes: receiving, by a receiving side, a first communication signal without a pilot symbol; processing the communication signal through a first model to obtain a second communication signal; and performing signal parsing processing on the second communication signal to obtain communication data. In this way, based on the low-speed receiver (first model) architecture with the cascaded neural network, the received communication signal without a pilot symbol may be processed, so that all symbols may be used to transmit data, thereby improving data transmission efficiency.

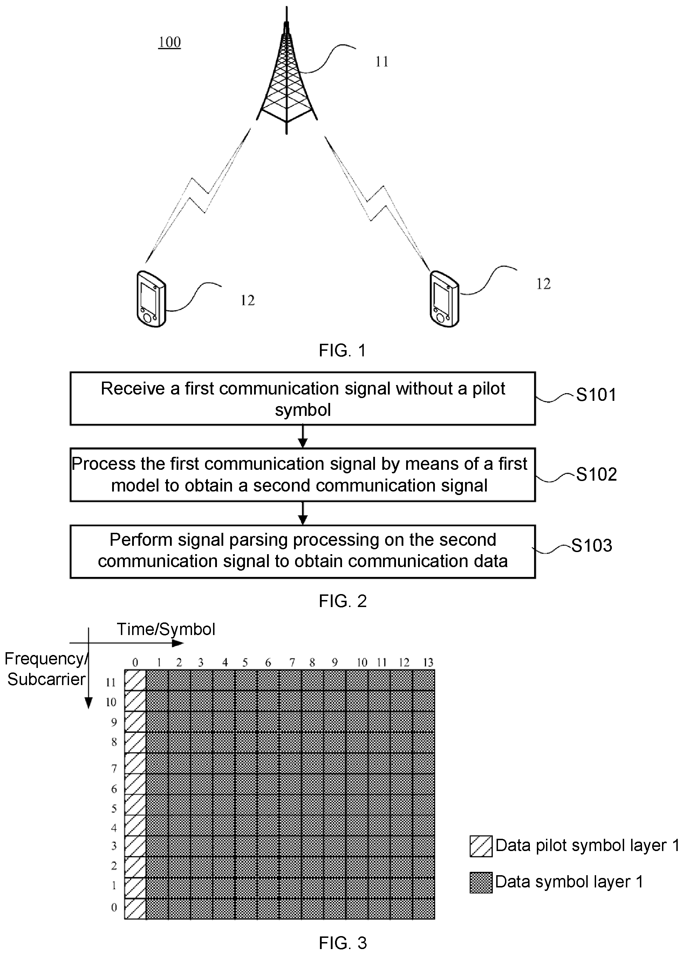

The method provided in the present disclosure may be applied to various communication systems. For example, the communication system may be a long term evolution (LTE) system, a fifth generation (5G) communication system, a Wi-Fi system, a communication system related to the 3rd generation partnership project (3GPP), a future evolved communication system (for example, a sixth generation (6G) communication system, etc.), a system integrating multiple systems, etc., which is not limited thereto. The method provided in the embodiments of the present disclosure is described below by taking a communication system 100 shown in FIG. 1 as an example. FIG. 1 is only a schematic diagram and does not constitute a limitation on applicable scenarios of the technical solution provided in the present disclosure.

FIG. 1 is an architectural schematic diagram of a communication system provided in the embodiments of the present disclosure. As shown in FIG. 1, the communication system 100 may include one or more network devices 11 and one or more terminal devices 12. The terminal device 12 may be in communicative connection with one or more network devices 11.

In some embodiments, the network device 11 may be used to implement functions such as resource scheduling, radio resource management, and radio access control for the terminal device. Specifically, the network device may be any node among a base station transceiver, a wireless base station, a wireless transceiver, a small base station, a radio access point, a transmission and reception point (transmission and receive point, TRP), a transmission point (TP), an evolved NodeB (eNB), a Home NodeB, a Home evolved NodeB, a reader and writer, and some other access nodes. In some embodiments, the communication system 100 may also include base stations of different types, for example, a macro cell base station and/or a small cell base station.

The terminal device 12 may also be referred to as a terminal, user equipment (UE), a mobile platform, a mobile terminal, etc. The terminal device may be an internet of things (IoT) device, used for collecting various information, and then performing forward error correction encoding on data information and transmitting data to the base station. The terminal device may also be a mobile device such as a mobile phone, a tablet computer, a computer with a wireless transceiving function, a car, or an electric vehicle, etc. In addition, the terminal device may be fixed or mobile. Terminal devices with various types may also include or be referred to by those skilled in the art as, a mobile station, a user station, a mobile unit, a user unit, a radio unit, a remote unit, a mobile device, a wireless device, a wireless communication device, a remote device, a mobile user station, an access terminal, a mobile terminal, a wireless terminal, a remote terminal, a handheld apparatus, a user agent, a mobile client, a client, a Passive Tag, or some other possible devices. Moreover, UEs with various types may also be a cellular phone, a Personal Digital Assistant (PDA), a wireless modem, a wireless communication device, a handheld device, a tablet computer, a laptop computer, a cordless phone, a Wireless Local Loop (WLL) station, and so on. UEs with various types may communicate with base stations and network devices with various types (including macro eNBs, small cell eNBs, relay base stations, etc.). The wireless communication system 100 may also include an IoT system or be a part of an IoT system.

In some embodiments, in a communication process, the network device transmits data to the terminal device, and the terminal device receives the data transmitted from the network device. Thus, the network device may be referred to as a transmitting side. Correspondingly, the terminal device may be referred to as a receiving side. Alternatively, the terminal device transmits data to the network device, and the network device may be referred to as a receiving side. Correspondingly, the terminal device may be referred to as a transmitting side.

It should be noted that FIG. 1 is only an exemplary framework diagram. The number of devices or nodes and names of the various devices included in FIG. 1 are not limited, and in addition to the functional nodes shown in FIG. 1, the communication system may also include other nodes or devices, such as a core network device.

The application scenarios of the embodiments of the present disclosure are not limited. The system architecture and service scenarios described in the embodiments of the present disclosure are intended to illustrate the technical solution of the embodiments of the present disclosure more clearly, and do not constitute a limitation on the technical solution provided in the embodiments of the present disclosure. Those ordinary skilled in the art may know that as the network architecture evolves and new service scenarios emerge, the technical solution provided in the embodiments of the present disclosure is also applicable to similar technical problems.

The embodiments provided in the present disclosure will be specifically introduced below in conjunction with the drawings of the specification.

As shown in FIG. 2, the embodiments of the present disclosure provide a communication method, which is applied to a receiving side, and includes the following steps S101 to S103.

In S101: a first communication signal without a pilot symbol is received.

In some embodiments, all symbols included in the first communication signal may be used to carry data.

It should be noted that the transmitting side may transmit the first communication signal without a pilot symbol to the receiving side, and correspondingly, the receiving side receives the first communication signal. In this communication process, there are no pilot symbols, i.e., all symbols may be used to transmit data, thereby improving data transmission efficiency.

In an example, as shown in FIG. 3, frequency-domain data received by the receiving side has undergone normalization processing, where the frequency-domain data includes the corresponding data pilot symbol layer 1 and data symbol layers 1.

In S102: the first communication signal is processed through a first model to obtain a second communication signal.

In some embodiments, a sub-model of the first model may be constructed based on a convolutional neural network, a residual neural network, or a residual neural network with an attention mechanism.

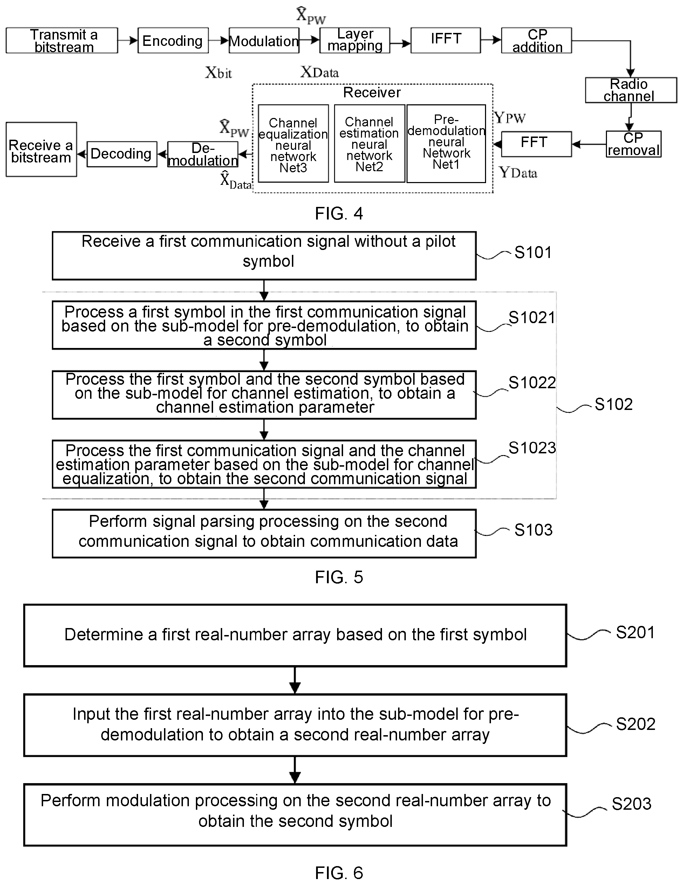

In some embodiments, the first model may include a sub-model for pre-demodulation, a sub-model for channel estimation, and a sub-model for channel equalization. That is, the sub-model for pre-demodulation, the sub-model for channel estimation, and the sub-model for channel equalization may be constructed based on a convolutional neural network, a residual neural network, or a residual neural network with an attention mechanism. Exemplarily, as shown in FIG. 4, a receiver on the receiving side may include a pre-demodulation neural network Net1, a channel estimation neural network Net2, and a channel equalization neural network Net3.

In some embodiments, a transmitter in the communication system without a pilot shown in FIG. 4 may use channel state information (CSI) to perform precoding and pre-equalization processing on the transmission signal, so as to further improve the detection performance of the receiver without a pilot. The channel state information may be acquired via a sounding reference signal (SRS) in a time division duplex (TDD) mode, and may be obtained via measurement feedback of a channel-state-information reference signal (CSI-RS) of the UE in a frequency-division duplex (FDD) mode.

Thus, the receiving side may process the first communication signal through the sub-model for pre-demodulation, the sub-model for channel estimation, and the sub-model for channel equalization, to obtain the second communication signal. Exemplarily, as shown in FIG. 5, the process in which the receiving side processes the first communication signal may specifically include the following step S1021 to step S1023.

In S1021: a first symbol in the first communication signal is processed based on the sub-model for pre-demodulation, to obtain a second symbol.

The first symbol above may be used to carry data and for channel estimation. In some embodiments, the first symbol may also be referred to as a data pilot symbol. Moreover, other symbols in the first communication signal other than the first symbol may be referred to as data symbols, and the data symbols are only used to carry data.

In some embodiments, the first symbol is a first received symbol in the first communication signal.

It should be noted that the first symbol may be understood as a first symbol transmitted over a traffic channel, and it may be a symbol preset by the receiving side and the transmitting side. The first received symbol in the first communication signal is taken as the first symbol, so that after receiving the first symbol, the receiving side may first perform channel estimation based on the first symbol to obtain a channel estimation parameter, to facilitate processing other symbols after the first symbol in the first communication signal based on the channel estimation parameter.

Moreover, the second symbol above may be obtained by processing the first symbol; it should be understood that the second symbol obtained here may be understood as a prediction value, for the information data transmitted from the transmitting side and carried by the first symbol, the prediction value being output by the sub-model for pre-demodulation.

In some embodiments, the receiving side may first perform real-number conversion processing on the first symbol, to determine a first real-number array based on the first symbol. Then the first real-number array is input into the sub-model for pre-demodulation, to obtain second real-number data. Then, modulation processing is performed on the second real-number array, to obtain the second symbol.

In some embodiments, the sub-model for pre-demodulation is obtained by training based on a first sample set. The first sample set includes a plurality of first samples and labels corresponding to the plurality of first samples respectively, a first sample is a first symbol, and a label corresponding to the first sample is a third symbol corresponding to the first symbol.

It should be understood that the second symbol is a prediction value of the information data that is transmitted from the transmitting side in the data pilot symbol. The third symbol is an actual value of the information data that is transmitted from the transmitting side in the data pilot symbol.

In some embodiments, the first sample set may be determined based on related data generated in a simulation platform for the communication system. The simulation platform may simulate communication processes in various communication environments, that is, simulation data under communication channels based on multiple channel features may be obtained. For example, the simulation data may include transmission data of the transmitting side and reception data of the receiving side. Thus, the reception data of the receiving side may be taken as the training sample, and the transmission data corresponding to the reception data may be taken as the label for the training sample, to train the model. In the embodiments of the present disclosure, a first symbol (data pilot symbol) may be extracted as the first sample described above from the reception data, and the third symbol may be extracted as the label corresponding to the first sample, from the transmission data, to train the sub-model for pre-demodulation. The third symbol obtained here is the actual value of the information data that is transmitted from the transmitting side and carried by the first symbol.

In some embodiments, multiple groups of training samples and labels may be generated under different fading channels.

In some embodiments, real-number conversion processing and data rearrangement processing may be performed on the first symbol extracted from the reception data, to obtain the first sample.

Exemplarily, bitstream data $X_{bit}$ to be modulated that is generated by the transmitting side based on the processing process shown in FIG. 4, and data $Y_{PW}$ of the data pilot symbol through the radio fading channel received by the receiving side, may be obtained in a simulation system. Then, real-number conversion processing and data rearrangement processing based on a processing subband (or referred to as a processing granularity) of the sub-model for pre-demodulation may be performed on the data $Y_{PW}$, to obtain N*X real-number arrays, where a real-number array may include $[Re(Y_{PW}), Im(Y_{PW})]$. The processing subband of the sub-model for pre-demodulation is X REs (Resource Elements), that is, $Y_{PW}$ may be rearranged into data of N subbands. In addition, Re( ) represents an operation for taking a real part, and Im( ) represents an operation for taking an imaginary part. The N*X real-number arrays corresponding to the data $Y_{PW}$ are a first sample.

Moreover, real-number conversion processing and then data rearrangement processing based on the processing subband (or referred to as a processing granularity) of the sub-model for pre-demodulation may also be performed on the data $X_{bit}$ of the transmitting side, to obtain N*X real-number arrays. The j-th real-number array may be represented as

$$X_{pw,bit,j} = [X_{Bit,0},...,X_{Bit,Q_{m-1}}]$$. $Q_m$ is a modulation order. Then, $N*X*Q_m$ real-number arrays $X_{pw,bit}$ corresponding to the data $X_{bit}$ is the label corresponding to the first sample described above. Thus, the sub-model for pre-demodulation may be trained based on the obtained first sample and the label corresponding to the first sample.

In some embodiments, the first sample set may also be determined based on actual communication data in various communication systems. For example, reception data of the receiving side in historical communication data that was actually transmitted in the communication system may be taken as the training sample, and transmission data of the transmitting side in the historical communication data may be taken as the label corresponding to the training sample, to train the model. Similarly, the first symbol (the data pilot symbol) may be extracted as the first sample described above, from the reception data in the historical communication data, and the third symbol (actual transmission data of the transmitting side) may be extracted as the label corresponding to the first sample, from the transmission data in the historical communication data, to train the sub-model for pre-demodulation.

It should be understood that the method for determining the first sample set described above is only an example, and the first sample set may also be determined by other possible methods, which are not limited in the present disclosure.

In some embodiments, the process of training the sub-model for pre-demodulation based on the first sample set includes the following S1 to S5.

In S1: an initial sub-model for pre-demodulation to be trained and the first sample set are acquired.

In S2: any first sample in the first sample set is input as a target sample into the initial sub-model for pre-demodulation, to obtain an output result corresponding to the target sample, i.e., a prediction value of information data carried by the first symbol.

In S3: the output result of the initial sub-model for pre-demodulation is compared with a label corresponding to the target sample, to determine a loss value.

In S4: a model parameter of the initial sub-model for pre-demodulation is adjusted according to the loss value.

In S5: a new target sample is determined based on the first sample set, and steps S1 to S4 are performed repeatedly until the model converges.

Moreover, whether the model converges may be determined based on the loss value output each time in the training process of the initial sub-model for pre-demodulation, or whether the sample converges may be determined based on the number of training times of the model, which is not limited in the present disclosure.

For example, when the loss value is less than a loss value threshold, it may be determined that the model converges.

For another example, when the number of training times exceeds a time number threshold, it may be determined that the model converges.

In this way, the converged model may be determined as a sub-model for pre-demodulation that is trained completely.

In some embodiments, a loss function used in the above training process may be a binary cross-entropy loss function, a Euclidean distance, a cosine distance, a combination of a Euclidean distance and a cosine distance as a loss function, or other possible loss functions.

In some embodiments, an Adam optimizer may also be utilized to train the sub-model for pre-demodulation described above (or referred to as the pre-demodulation neural network).

Then, after the training of the sub-model for pre-demodulation is completed, the sub-model for pre-demodulation may be deployed in the receiving side of the communication system, for online signal detection, where processing similar to that of the first sample described above also needs to be performed on the detected first symbol, to enable inputting the processed first symbol into the sub-model for pre-demodulation to obtain the second symbol.

In S1022: the first symbol and the second symbol are processed based on the sub-model for channel estimation, to obtain a channel estimation parameter.

In some embodiments, a third real-number array may be determined based on the first symbol and the second symbol. Then, the third real-number array is input into the sub-model for channel estimation, to obtain the channel estimation parameter.

In some embodiments, real-number conversion processing and data rearrangement processing based on a processing granularity of the sub-model for channel estimation may be performed on the first symbol and the second symbol, to obtain the third real-number array.

In some embodiments, the sub-model for channel estimation is trained based on a second sample set. The second sample set includes a plurality of second samples and labels corresponding to the plurality of second samples, a second sample is a first symbol and a third symbol corresponding to the first symbol, and a label corresponding to the second sample is a channel actual measurement parameter.

In some embodiments, the second sample set may also be determined based on related data generated in a simulation platform for the communication system. Similarly, the simulation platform may simulate communication processes in various communication environments, that is, simulation data under communication channels based on multiple channel features may be obtained. In this way, the first symbol extracted based on reception data of the receiving side and the third symbol extracted based on transmission data of the transmitting side, as well as an ideal channel $H_{pw}$ for this communication process in the simulation platform, may be obtained. In this way, the first symbol and the third symbol may be taken as a second sample, and the ideal channel $H_{pw}$ may be taken as a label, to train the sub-model for channel estimation.

In some embodiments, multiple groups of second samples and labels may be generated under different fading channels.

In some embodiments, real-number conversion processing and data rearrangement processing may be performed on the first symbol extracted from the reception data and the third symbol extracted from the transmission data, to obtain the second sample.

Exemplarily, modulation data $X_{PW}$ of the data pilot symbol of the transmitting side that is generated by the transmitting side based on the processing process in FIG. 4, and data $Y_{PW}$ of the data pilot symbol through the radio fading channel received by the receiving side, may be obtained in the simulation system. Then, real-number conversion processing and data rearrangement processing based on a processing subband (or referred to as a processing granularity) of the sub-model for channel estimation may be performed on the data $X_{PW}$ and the data $Y_{PW}$, to obtain N*X real-number arrays, where a real-number array may include $[Re(Y_{PW}), Im(Y_{PW}), Re(X_{PW}), Im(X_{PW})]$. The processing subband of the sub-model for channel estimation is X REs, that is, the $Y_{PW}$ may be rearranged into data of N subbands. Moreover, Re( ) represents an operation for taking a real part, and Im( ) represents an operation for taking an imaginary part. The N*X real-number arrays corresponding to the data $X_{PW}$ and the data $Y_{PW}$ are a second sample.

Moreover, an ideal channel $H_{pw}$ through which the data pilot symbol (first symbol) passes in the communication process this time may also be acquired, and real-number conversion processing and data rearrangement processing based on a processing subband (or referred to as a processing granularity) of the sub-model for channel estimation may be performed on the ideal channel $H_{pw}$, to obtain N*X real-number arrays $H_{pw}^{'}$. The j-th real-number array may be represented as $X_{pw,j} = [Re\ (H_{pw})\ ,\ Im\ (H_{pw})\ ]$. The N*X*2 real-number arrays $H_{pw}^{'}$ corresponding to the data $H_{pw}$ is the label corresponding to the second sample described above. In this way, the sub-model for channel estimation may be trained based on the obtained second sample and the label corresponding to the second sample.

In some embodiments, the second sample set may also be determined based on actual communication data in various communication systems. For example, reception data of the receiving side and transmission data of the transmitting side in historical communication data that was actually transmitted in the communication system may be taken as the training sample, and the actual channel parameter may be taken as the label, to train the model.

It should be understood that the above method for determining the second sample set is only an example, and the second sample set may also be determined by other possible methods, which are not limited in the present disclosure.

In some embodiments, in a case where the channel actual measurement parameter includes channel parameters with multi-antenna dimensions, the channel parameters with multi-antenna dimensions are arranged based on a preset order of the sub-model for channel estimation, and the channel estimation parameter output by the sub-model for channel estimation is also arranged based on the preset order.

Exemplarily, in the communication system without a pilot in a low-speed scenario, the transmission is performed by utilizing a multiple-input multiple-out-put (MIMO) technology, with L=2 layers of data streams, P=2 antenna ports, T=2 physical transmission antennas, and R=2 physical reception antennas. In this case, the channel arrangement based on the preset order of the sub-model for channel estimation may be represented as

$$H_{pw} = [H_{pw}^{R=1,P=1}, H_{pw}^{R=2,P=1}, H_{pw}^{R=1,P=2}, H_{pw}^{R=2,P=2}]$$ , and channel estimation parameters output by the sub-model for channel estimation are also arranged based on the preset order.

In addition, a process for training the sub-model for channel estimation according to the second sample set may refer to the process for training the sub-model for pre-demodulation in the above steps S1 to S5, which is not repeated here.

Furthermore, after the training of the sub-model for channel estimation is completed, the sub-model for channel estimation may be deployed at the receiving side in the communication system to perform online signal detection, where processing similar to that for the second sample described above also needs to be performed on the detected first symbol and second symbol, so that the processed data can be input to the sub-model for channel estimation, to obtain the channel estimation parameter.

In S1023: the first communication signal and the channel estimation parameter are processed based on the sub-model for channel equalization, to obtain the second communication signal.

In some embodiments, preprocessing may be performed on the first communication signal and the channel estimation parameter to obtain a third real-number array. Moreover, the third real-number array is input to the sub-model for channel equalization to obtain the second communication signal.

In some embodiments, real-number conversion processing and data rearrangement processing based on a processing granularity of the sub-model for channel equalization may be performed on the first communication signal and the channel estimation parameter, to obtain a fourth real-number array.

In some embodiments, the sub-model for channel equalization is trained based on a third sample set. The third sample set includes a plurality of third samples and labels corresponding to the plurality of third samples respectively, a third sample is the first communication signal and a channel parameter, and a label corresponding to the third sample is a third communication signal corresponding to the first communication signal.

It should be understood that the second communication signal may be understood as an estimated value of the transmission data. The third communication signal is an actual value of the transmission data, and thus, may be taken as a label for model training.

In some embodiments, the third sample set may be determined based on related data generated in the simulation platform for the communication system. The simulation platform may simulate communication processes in various communication environments, that is, simulation data under communication channels based on multiple channel features may be obtained. In this way, the reception data, i.e., the first communication signal and the channel parameter, may be extracted as a third sample from the simulation data. Moreover, the transmission data, i.e., the second communication signal, may be extracted as a label corresponding to the third sample, from the simulation data.

In some embodiments, multiple groups of third samples and labels may be generated under different fading channels.

In some embodiments, real-number conversion processing and data rearrangement processing may be performed on the first communication signal and the channel parameter, to obtain the third sample.

Exemplarily, in the simulation system, modulated data $X_{Data}$ of the transmitting side generated by the transmitting side based on the processing process in FIG. 4, and data $Y_{Data}$ of the data symbol through the radio fading channel received by the receiving side, may be obtained, and the channel $H_{Data}$ through which the data symbol passes may be acquired. Furthermore, real-number conversion processing and data rearrangement processing based on a processing subband (or referred to as a processing granularity) of the sub-model for channel equalization may be performed on the data $Y_{Data}$ and the channel $H_{Data}$, to obtain N*X real-number arrays, where a real-number array may include [Re($Y_{Data}$), Im($Y_{Data}$), Re($H_{Data}$), Im($H_{Data}$)]. The processing subband of the sub-model for channel equalization is X REs, that is, the $Y_{PW}$ may be rearranged into data of N subbands. Moreover, Re( ) represents an operation for taking a real part, and Im( ) represents an operation for taking an imaginary part. The N*X real-number arrays corresponding to the data $X_{PW}$ and the channel $H_{Data}$ are a third sample.

Moreover, real-number conversion processing and data rearrangement processing may also be performed on the data $X_{Data}$ of the transmitting side, to obtain N*X real-number arrays, where the j-th real-number array may be represented as $X_{Data,j} = [Re(X_{Data}), Im(X_{Data})]$. The N*X real-number arrays is the label of the third sample described above. Thus, the sub-model for channel equalization may be trained based on the obtained third sample and the label corresponding to the third sample.

In some embodiments, the third sample set may also be determined based on actual communication data in various communication systems. For example, the training sample and the label may be determined from reception data of the receiving side, transmission data of the transmitting side in historical communication data that was actually transmitted in the communication system, and channel parameters, to train the model.

It should be understood that the above method for determining the third sample set is only an example, and the third sample set may also be determined by other possible methods, which are not limited in the present disclosure.

In addition, the process of training the sub-model for channel equalization according to the third sample set may refer to the training process of the sub-model for pre-demodulation in the above steps S1 to S5, which is not repeated here.

Furthermore, after the training of the sub-model for channel equalization is completed, the sub-model for channel equalization may be deployed at the receiving side in the communication system to perform online signal detection, where processing similar to that for the third sample described above also needs to be performed on the detected data, so that the processed data can be input to the sub-model for channel equalization to obtain the second communication signal.

It should be noted that the technical solution provided in the present disclosure adopts a receiver (first model) with a neural network structure that may be driven by both data and model, which may take linearly-computed data as training data input to the first model, thereby reducing the sample quantity required for training and the duration required for training.

In some embodiments, the receiving side may perform cyclic prefix (CP) removal processing and Fourier transform (fast fourier transform, FFT) processing on the first communication signal, and then process the first communication signal through the first model, to obtain the second communication signal.

Exemplarily, as shown in FIG. 4, the transmitting side may encode a bitstream to be transmitted, to obtain $X_{bit}$. Then, modulation processing is performed on the $X_{bit}$ to obtain $X_{Date}$, and then, layer mapping processing and inverse Fourier transform (inverse fast fourier transform, IFFT) processing are performed. In some embodiments, the method may also include cyclic prefix (CP) introduction, also referred to as CP addition processing. That is, after a time-domain OFDM signal to be transmitted is obtained through IFFT processing, a CP corresponding to a subcarrier spacing corresponding to the time-domain OFDM signal may be added, and thus, when transmitting the data frame, the transmitting side may transmit the time-domain OFDM signal and the CP.

It should be noted that the introduction of the cyclic prefix by the transmitting side between subcarriers may be used to prevent subcarrier interference (Inter-carrier-interference, ICI).

Correspondingly, after the transmission data passes through the radio channel, corresponding to the transmitting side, the receiving side may receive the reception data. The receiving side may first perform CP removal processing and FFT processing on the reception data (i.e., the first communication signal), and then, process the first communication signal through the first model. Moreover, the receiving side may also perform demodulation processing and decoding processing on the output data of the first model, to obtain the received bitstream.

In S103: signal parsing processing is performed on the second communication signal to obtain communication data.

In some embodiments, signal parsing processing includes complexification processing, demodulation processing, and decoding processing.

Exemplarily, since the obtained second communication signal $\hat{X}_{Data}$ is a real-number array, the complexification processing may also be performed on the second communication signal to obtain a processed second communication signal $\hat{X}_{Data}^{sym}$.

$\hat{X}_{Data}$ may also be represented as $\hat{X}_{Data} = [\hat{X}_{Data,1}^{Real}, \hat{X}_{Data,1}^{Imag}, ..., \hat{X}_{Data,i}^{Real}, \hat{X}_{Data,i}^{Imag}, ..., \hat{X}_{Data,K}^{Real}, \hat{X}_{Data,K}^{Imag}]$.

The complexification processing is performed on $\hat{X}_{Data}$ to obtain the processed second communication signal

$$\hat{X}_{Data}^{sym} = [complex(X_{Data,1}^{Real}, X_{Data,1}^{Imag}), ..., complex(X_{Data,i}^{Real}, X_{Data,i}^{Imag}), ..., complex(X_{Data,K}^{Real}, X_{Data,K}^{Imag})]$$

Herein, complex( ) represents a processing process for forming one complex-valued data.

In some embodiments, the subsequent demodulation and decoding processing may also be performed on the complex-valued data $\hat{X}_{Data}^{sym}$, which will not be repeated here.

Based on the technical solution provided in the present disclosure, all symbols in the communication process may be used to transmit data, which improves data transmission efficiency. Moreover, the technical solution adopts a low-speed receiver (first model) architecture based on a cascaded neural network, and based on this architecture, the received communication signal without a pilot symbol may be processed, which can more accurately reflect channel impacts, and further improve signal detection performance of the receiver.

In addition, the technical solution provided in the present disclosure adopts a receiver (first model) with a neural network structure that may be driven by both data and model, which may take linearly-computed data as training data input to the first model, thereby reducing the sample quantity required for training and the duration required for training.

In some embodiments, as shown in FIG. 6, the process where the receiving side processes the first symbol in the first communication signal based on the sub-model for pre-demodulation to obtain the second symbol, may include the following steps S201 to S203.

In S201: a first real-number array is determined based on the first symbol.

It should be noted that the receiving side may construct input data of the sub-model for pre-demodulation (e.g., the pre-demodulation neural network Net1) based on the first symbol. Since the structure of the sub-model for pre-demodulation is generally a real-number neural network, the receiving side may first perform real-number conversion processing on the first symbol to obtain the first real-number array, and then may input the first real-number array into the sub-model for pre-demodulation, for subsequent data processing.

In some embodiments, a first initial real-number array may be determined according to the first symbol. The first real-number array is then determined based on the first initial real-number array.

In some embodiments, an element in the first initial real-number array is determined based on a value of a real part of the first symbol and a value of an imaginary part of the first symbol.

Exemplarily, the receiving side may extract the first symbol $Y_{PW}$ from the received first communication signal (the frequency-domain signal) Y, and separate the real part and the imaginary part of $Y_{PW}$ to form a real-number array, i.e., the first initial real-number array corresponding to the first symbol. For example, the first initial real-number array may be expressed as $[Re(Y_{PW}), Im(Y_{PW})]$. Re( ) represents an operation for taking the real part, and Im( ) represents an operation for taking the imaginary part.

Furthermore, a size of a first subband, a number of first subbands, and a number of elements in the first initial real-number array are taken as dimension numbers of three dimensions of a real-number array, respectively, and data carried in the first symbol is rearranged based on the dimension numbers, to obtain the first real-number array.

The size of the first subband is determined based on a processing granularity of the sub-model for pre-demodulation.

Exemplarily, the size of the processing granularity of the neural network model (the sub-model for pre-demodulation), X REs, may be defined as a processing subband, and data rearrangement with the processing subband as the granularity is performed on data pilot symbols $Y_{PW}^{ka}$ received on all antennas, so as to be rearranged into reception data of N subbands, for example, to obtain the first real-number array $Net_{1,in} = [N \times X \times 2]_{ka}$.

Example 1: in the communication system without a pilot in a low-speed scenario, the transmission is performed by utilizing a single input single output (SISO) technology, with T=1 physical transmission antenna and R=1 physical reception antenna. The frequency-domain signal Y received by the receiving side occupies 24 RBs (Resource Blocks) in the frequency domain, totaling 288 REs; and occupies 14 OFDM symbols in the time domain, and the data dimension of Y is 14*288. The processing granularity X=72 of the first model is 6 RBs, i.e., 72 REs; and the data pilot symbol adopts QPSK (Quadrature Phase Shift Keying) modulation, with $Q_m$=2.

Thus, the data pilot symbol $Y_{PW}$ with the dimension 288*1, i.e., the first symbol described above, may be extracted from the received frequency-domain signal Y. Since the neural network of the sub-model for pre-demodulation is a real-number neural network, the real part and the imaginary part of $Y_{PW}$ need to be separated to form a real-number array, i.e., the first initial real-number array described above, for example, $[Re(Y_{PW}), Im(Y_{PW})]$, with the dimension 288*2. Re( ) represents an operation for taking the real part, and Im( ) represents an operation for taking the imaginary part.

Furthermore, the first real-number array may be determined based on the first initial real-number array. In a case where the frequency-domain data is divided into N=4 subbands at the processing granularity X=72 of the sub-model for pre-demodulation (i.e., the neural network model), each subband $Y_{PW}^{SUB}$ has 6 RBs, totaling 72 REs, the dimension of each subband $Y_{PW}^{SUB}$ is 72*1, and $Y_{PW}$ only has a value on R=1 reception antenna. Thus, $Y_{PW}$ rearranged according to subbands may form a real-number array, i.e., the first real-number array, for example, the following $Net_{1,in}$, with the dimension 4*72*2.

$$Net_{1,in} = \begin{bmatrix} Re\ (Y_{PW}^{SUB=1\,,\,R=1}) \,, & Im\ (Y_{PW}^{SUB=1\,,\,R=1}) \\ Re\ (Y_{PW}^{SUB=2\,,\,R=1}) \,, & Im\ (Y_{PW}^{SUB=2\,,\,R=1}) \\ Re\ (Y_{PW}^{SUB=3\,,\,R=1}) \,, & Im\ (Y_{PW}^{SUB=3\,,\,R=1}) \\ Re\ (Y_{PW}^{SUB=4\,,\,R=1}) \,, & Im\ (Y_{PW}^{SUB=4\,,\,R=1}) \end{bmatrix}$$

In addition, the training sample of the sub-model for pre-demodulation provided in the above embodiments, i.e., the first sample, may be determined based on the bitstream data to be modulated of the data pilot symbol of the transmitting side and the received data pilot symbol of the receiving side.

Exemplarily, from the bitstream data $X_{bit}$ to be modulated of the data pilot symbol of the transmitting side, with the dimension 288*$Q_m$ and $Q_m$=2 being the modulation order, through the radio fading channel, the received data pilot symbol data $Y_{PW}$ of the receiving side with the dimension 288*1 is obtained. Then, the real-number conversion processing and data rearrangement processing in step S201 are performed on $Y_{PW}$ to obtain 4*72 real-number arrays. Herein, a single real-number array is composed of $[Re(Y_{PW}), Im(Y_{PW})]$, which may be taken as the first sample of the sub-model for pre-demodulation. In addition, the real-number conversion processing and data rearrangement processing may also be performed on the bitstream data $X_{bit}$ to be modulated of the data pilot symbol of the transmitting side, to obtain 4*72 real-number arrays, where the j-th real-number array may be $X_{pw,bit,j} = [X_{Bit,0},...,X_{Bit,Q_{m-1}}]$. Herein, the modulation order is $Q_m=2$, and the 4*72*$Q_m$ real-number arrays may be taken as the label of the first sample. Then, the sub-model for prte-demodulaion may be trained based on the obtained first sample and label.

In S202: the first real-number array is input into the sub-model for pre-demodulation to obtain a second real-number array.

The receiving side may construct input data of the sub-model for pre-demodulation, i.e., the first real-number array, based on the first symbol extracted from the reception data, and then may input the first real-number array into the sub-model for pre-demodulation to obtain the second real-number array.

For example, the receiving side may input the first real-number array $Net_{1,in}$ obtained in the above step S201 into the neural network Net1 of the sub-model for pre-demodulation; and through online detection by the neural network Net1 of the sub-model for pre-demodulation, the output $\hat{X}_{PW,bit}$ of the neural network Net1, i.e., the second real-number array, may be obtained.

In some examples, taking the above Example 1 as an example, the first real-number array $Net_{1,in}$ may be input into the neural network Net1 of the sub-model for pre-demodulation, to obtain the output $\hat{X}_{PW,bit}$ of the neural network Net1, which is 4*72 real-number arrays, where the j-th real-number array is: $\hat{X}_{PW,bit,j} = [X_{Bit,0},...,X_{Bit,Q_{m-1}}]$.

For example, the following $Net_{1,Out}$ may also be referred to as the second real-number array.

$$Net_{1,Out} = \begin{bmatrix} \hat{X}_{PW,bit,0}^{SUB=1,R=1} & , & \hat{X}_{PW,bit,1}^{SUB=1,R=1} \\ \hat{X}_{PW,bit,0}^{SUB=2,R=1} & , & \hat{X}_{PW,bit,1}^{SUB=1,R=1} \\ \hat{X}_{PW,bit,0}^{SUB=3,R=1} & , & \hat{X}_{PW,bit,1}^{SUB=1,R=1} \\ \hat{X}_{PW,bit,0}^{SUB=4,R=1} & , & \hat{X}_{PW,bit,1}^{SUB=1,R=1} \end{bmatrix}$$

In S203: modulation processing is performed on the second real-number array to obtain the second symbol.

In some embodiments, modulation processing may be performed on the second real-number array based on the modulation order of the data pilot symbol, to obtain the second symbol.

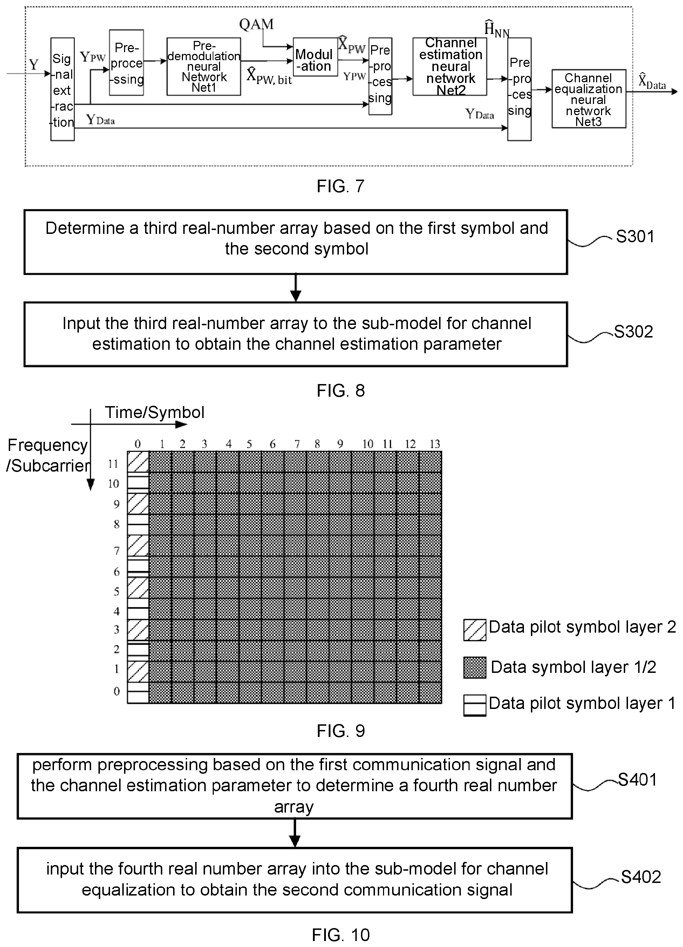

For example, as shown in FIG. 7, the receiving side may perform modulation processing on the second real-number array $\hat{X}_{PW,bit}$ output by the neural network Net1 of the sub-model for pre-demodulation, based on the modulation order $Q_m=2$, taking the communication scenario of Example 1 described above as an example, to obtain the second symbol, i.e., an estimated value $\hat{X}_{PW}$ of the data pilot signal, with the dimension 4*72*2.

Based on the above embodiments, the received communication signal of the data pilot symbol may be processed to improve the accuracy of determining channel impacts, thereby improving signal detection performance of the receiver.

In some embodiments, as shown in FIG. 8, the process where the receiving side processes the first symbol and the second symbol based on the sub-model for channel estimation to obtain the channel estimation parameter, may include the following steps S301 and S302.

In S301: a third real-number array is determined based on the first symbol and the second symbol.

It should be noted that the receiving side may construct input data for the sub-model for channel estimation, for example, a channel estimation neural network Net2, based on the first symbol and the second symbol. Since the structure of the sub-model for channel estimation is generally a real-number neural network, the receiving side may first perform real-number conversion processing on the first symbol and the second symbol to obtain the third real-number array, and then, may input the third real-number array to the sub-model for channel estimation for subsequent data processing.

In some embodiments, a third initial real-number array may be determined based on the first symbol and the second symbol.

An element in the third initial real-number array is determined based on a value of a real part of the first symbol, a value of an imaginary part of the first symbol, a value of a real part of the second symbol, and a value of an imaginary part of the second symbol.

Exemplarily, the receiving side may extract the first symbol $Y_{PW}$ and the second symbol $\hat{X}_{PW}$ from the received first communication signal (frequency-domain signal) Y, to form a real-number array, that is, the third initial real-number array $[Re(Y_{PW}), Im(Y_{PW}), Re(\hat{X}_{PW}), Im(\hat{X}_{PW})]$. Re( ) represents an operation for taking the real part, and Im( ) represents an operation for taking the imaginary part.

Furthermore, a size of a second subband, a number of second subbands, and a number of elements of the third initial real-number array are taken as dimension numbers of three dimensions of a real-number array, respectively, and data carried in the first symbol is rearranged based on the dimension numbers, to obtain the third real-number array. In some embodiments, the size of the second subband is determined based on a processing granularity of the sub-model for channel estimation.

For example, the size of the processing granularity of the neural network model (the sub-model for channel estimation), i.e., X REs, may be defined as a processing subband, and data rearrangement with the processing subband as the granularity is performed on data pilot symbols $Y_{PW}^{ka}$ received on all antennas, so as to be rearranged into reception data of N subbands, for example, to obtain the first real-number array $Net_{2,in} = [N \times X \times 4]_{ka}$.

In an example, taking the scenario in the above Example 1 as an example, i.e., in the communication system without a pilot in a low-speed scenario, the transmission is performed by utilizing the SISO technology, with T=1 physical transmission antenna and R=1 physical reception antenna, etc. The data pilot symbol $Y_{PW}$ (i.e., the first symbol described above, with the dimension 288*1) and the second symbol $\hat{X}_{PW}$ may be extracted from the received frequency-domain signal Y. Then, the third initial real-number array is obtained, for example, $[Re(Y_{PW}), Im(Y_{PW}), Re(\hat{X}_{PW}), Im(\hat{X}_{PW})]$. Then, the third real-number array may be determined based on the third initial real-number array. In a case where the frequency-domain data is divided into N=4 subbands at the processing granularity X=72 of the sub-model for channel estimation (i.e., the neural network model), data rearrangement with the processing subband as the granularity is performed on data pilot signals $Y_{PW}^{ka}$ received on all antennas, so as to be rearranged into reception data $Net_{2,in}$ of N=4 subbands, i.e., the third real-number array with the dimension 4*72*2. The $Y_{PW}^{SUB}$ and $\hat{X}_{PW}^{SUB}$ dimensions of each subband are both 72*1.

$$Net_{2,in} = \begin{bmatrix} Re\ (Y_{PW}^{SUB=1\,,\,R=1}), Im\ (Y_{PW}^{SUB=1\,,\,R=1}), Re\ (\hat{X}_{PW}^{SUB=1\,,\,R=1}), & Im\ (\hat{X}_{PW}^{SUB=1\,,\,R=1}) \\ Re\ (Y_{PW}^{SUB=2\,,\,R=1}), Im\ (Y_{PW}^{SUB=2\,,\,R=1}), Re\ (\hat{X}_{PW}^{SUB=2\,,\,R=1}), & Im\ (\hat{X}_{PW}^{SUB=2\,,\,R=1}) \\ Re\ (Y_{PW}^{SUB=3\,,\,R=1}), Im\ (Y_{PW}^{SUB=3\,,\,R=1}), Re\ (\hat{X}_{PW}^{SUB=3\,,\,R=1}), & Im\ (\hat{X}_{PW}^{SUB=3\,,\,R=1}) \\ Re\ (Y_{PW}^{SUB=4\,,\,R=1}), Im\ (Y_{PW}^{SUB=4\,,\,R=1}), Re\ (\hat{X}_{PW}^{SUB=4\,,\,R=1}), & Im\ (\hat{X}_{PW}^{SUB=4\,,\,R=1}) \end{bmatrix}$$

In addition, the training sample of the sub-model for channel estimation provided in the above embodiments, i.e., the second sample, may be determined based on the bitstream data to be modulated of the data pilot symbol of the transmitting side, the received data pilot symbol of the receiving side, and the channel parameter.

Exemplarily, from the modulation data $X_{PW}$ of the data pilot symbol of the transmitting side with the dimension 288*1, through the radio fading channel, received data pilot symbol data $Y_{PW}$ of the receiving side with the dimension 288*1 is obtained. Then, real-number conversion processing and data rearrangement processing are performed on the data $X_{PW}$ and the data $Y_{PW}$ to obtain 4*72 real-number arrays. Herein, a single real-number array is composed of $[Re(Y_{PW}), Im(Y_{PW}), Re(X_{PW}), Im(X_{PW})]$, which may be taken as the training sample of the sub-model for channel estimation, i.e., the second sample. In addition, the channel parameter $H_{PW}$ with the dimension 288*1 may also be acquired to perform real-number conversion processing and data rearrangement processing, so as to obtain 4*72 real-number arrays, where the j-th real-number array may be $H_{pw,j} = [Re\ (H_{PW}), Im\ (H_{PW})]$, which may be taken as the label of the second sample. Then, the sub-model for channel estimation may be trained based on the obtained second sample and label.

Example 2: in the communication system without a pilot in a low-speed scenario, the transmission is performed by utilizing an MIMO technology, with L=2 layers of data streams, P=2 antenna ports, T=2 physical transmission antennas, and R=2 physical reception antennas. The frequency-domain signal Y received by the receiving side may be:

$$Y=HX+N, \text{ that is, } \begin{bmatrix} y_1 \\ y_2 \end{bmatrix} = \begin{bmatrix} h_{11} & h_{12} \\ h_{21} & h_{22} \end{bmatrix} \cdot \begin{bmatrix} x_1 \\ x_2 \end{bmatrix} + \begin{bmatrix} n_1 \\ n_2 \end{bmatrix}.$$

X indicates a modulated transmission signal of 2 data streams, with the dimension $L \times 1$, i.e., $2 \times 1$. H is a radio channel matrix between the transmission and the reception, with the dimension $T \times R$, i.e., $2 \times 2$. N is additive white Gaussian noise, with the dimension $R \times 1$, i.e., $2 \times 1$. The dimension of frequency-domain reception data $Y_{Data}$ is also $R \times 1$, i.e., $2 \times 1$.

The frequency-domain signal Y occupies 12 RBs in the frequency domain, totaling 144 REs, occupies 4 OFDM symbols in the time domain, where data pilot symbol data $Y_{PW}$ is located at a first OFDM symbol in the time domain, and pilots of different streams occupy different REs in the frequency domain, so the data lasts for 3 OFDM symbols, starting from a second OFDM symbol in the time domain, and data of different streams occupies the same REs in the frequency domain, as shown in FIG. 9. The size of the processing granularity of the neural network model is X=36. In some embodiments, normalization processing has been performed on the received frequency-domain data, including data symbol layer 1/2, data pilot symbol layer 1, and data pilot symbol layer 2.

Data pilot symbol data $Y_{PW}$ (i.e., the first symbol described above, with the dimension 288*1) and the second symbol $\hat{X}_{PW}$ may be extracted from the received frequency-domain signal Y, where the second symbol includes a data pilot of a first antenna port of a first reception antenna (R=1, P=1), a data pilot of a first antenna port of a second reception antenna (R=2, P=1), a data pilot of a second antenna port of the first reception antenna (R=1, P=2), and a data pilot of a second antenna port of the second reception antenna (R=2, P=2). Then, a third initial real-number array, for example, the following real-number array with the dimension 4*72*4, may be obtained based on the received first symbol YPW and the predicted second symbol $\hat{X}_{PW}$.

$$
\begin{bmatrix}
\text{Re}\ (Y_{PW}^{SUB=1,\ R=1}), \text{Im}\ (Y_{PW}^{SUB=1,\ R=1}), \text{Re}\ \left(\hat{X}_{PW}^{SUB=1,\ R=1}\right), & \text{Im}\ \left(\hat{X}_{PW}^{SUB=1,\ R=1}\right) \\
\text{Re}\ (Y_{PW}^{SUB=2,\ R=1}), \text{Im}\ (Y_{PW}^{SUB=2,\ R=1}), \text{Re}\ \left(\hat{X}_{PW}^{SUB=2,\ R=1}\right), & \text{Im}\ \left(\hat{X}_{PW}^{SUB=2,\ R=1}\right) \\
\text{Re}\ (Y_{PW}^{SUB=3,\ R=1}), \text{Im}\ (Y_{PW}^{SUB=3,\ R=1}), \text{Re}\ \left(\hat{X}_{PW}^{SUB=3,\ R=1}\right), & \text{Im}\ \left(\hat{X}_{PW}^{SUB=3,\ R=1}\right) \\
\text{Re}\ (Y_{PW}^{SUB=4,\ R=1}), \text{Im}\ (Y_{PW}^{SUB=4,\ R=1}), \text{Re}\ \left(\hat{X}_{PW}^{SUB=4,\ R=1}\right), & \text{Im}\ \left(\hat{X}_{PW}^{SUB=4,\ R=1}\right)
\end{bmatrix}
$$

Then, the third real-number array may be determined based on the third initial real-number array. In a case where the frequency-domain data is divided into N=2 subbands at the processing granularity X=36 of the sub-model for channel estimation (i.e., the neural network model), data rearrangement with the processing subband as the granularity is performed on data pilot signals $Y_{PW}^{ka}$ received on all antennas, so as to be rearranged into reception data $Net_{2,in}$ of N=2 subbands, i.e., the third real-number array with the dimension 8*36*4. The $Y_{PW}^{SUB}$ dimension of each subband is 36*1.

$$
Net_{2,in} =
$$

$$
\begin{bmatrix}
\text{Re}\ (Y_{PW}^{SUB=1,\ R=1,\ P=1}), \text{Im}\ (Y_{PW}^{SUB=1,\ R=1,\ P=1}), \text{Re}\ \left(\hat{X}_{PW}^{SUB=1,\ R=1,\ P=1}\right), & \text{Im}\ \left(\hat{X}_{PW}^{SUB=1,\ R=1,\ P=1}\right) \\
\text{Re}\ (Y_{PW}^{SUB=1,\ R=2,\ P=1}), \text{Im}\ (Y_{PW}^{SUB=1,\ R=2,\ P=1}), \text{Re}\ \left(\hat{X}_{PW}^{SUB=1,\ R=2,\ P=1}\right), & \text{Im}\ \left(\hat{X}_{PW}^{SUB=1,\ R=2,\ P=1}\right) \\
\text{Re}\ (Y_{PW}^{SUB=1,\ R=1,\ P=2}), \text{Im}\ (Y_{PW}^{SUB=1,\ R=1,\ P=2}), \text{Re}\ \left(\hat{X}_{PW}^{SUB=1,\ R=1,\ P=2}\right), & \text{Im}\ \left(\hat{X}_{PW}^{SUB=1,\ R=1,\ P=2}\right) \\
\text{Re}\ (Y_{PW}^{SUB=1,\ R=2,\ P=2}), \text{Im}\ (Y_{PW}^{SUB=1,\ R=2,\ P=2}), \text{Re}\ \left(\hat{X}_{PW}^{SUB=1,\ R=2,\ P=2}\right), & \text{Im}\ \left(\hat{X}_{PW}^{SUB=1,\ R=2,\ P=2}\right) \\
\text{Re}\ (Y_{PW}^{SUB=2,\ R=1,\ P=1}), \text{Im}\ (Y_{PW}^{SUB=2,\ R=1,\ P=1}), \text{Re}\ \left(\hat{X}_{PW}^{SUB=2,\ R=1,\ P=1}\right), & \text{Im}\ \left(\hat{X}_{PW}^{SUB=2,\ R=1,\ P=1}\right) \\
\text{Re}\ (Y_{PW}^{SUB=2,\ R=2,\ P=1}), \text{Im}\ (Y_{PW}^{SUB=2,\ R=2,\ P=1}), \text{Re}\ \left(\hat{X}_{PW}^{SUB=2,\ R=2,\ P=1}\right), & \text{Im}\ \left(\hat{X}_{PW}^{SUB=2,\ R=2,\ P=1}\right) \\
\text{Re}\ (Y_{PW}^{SUB=2,\ R=1,\ P=2}), \text{Im}\ (Y_{PW}^{SUB=2,\ R=1,\ P=2}), \text{Re}\ \left(\hat{X}_{PW}^{SUB=2,\ R=1,\ P=2}\right), & \text{Im}\ \left(\hat{X}_{PW}^{SUB=2,\ R=1,\ P=2}\right) \\
\text{Re}\ (Y_{PW}^{SUB=2,\ R=2,\ P=2}), \text{Im}\ (Y_{PW}^{SUB=2,\ R=2,\ P=2}), \text{Re}\ \left(\hat{X}_{PW}^{SUB=2,\ R=2,\ P=2}\right), & \text{Im}\ \left(\hat{X}_{PW}^{SUB=2,\ R=2,\ P=2}\right)
\end{bmatrix}
$$

In addition, the training sample of the sub-model for channel estimation provided in the above embodiments, i.e., the second sample, may be determined based on the bitstream data to be modulated of the data pilot symbol of the transmitting side, the received data pilot symbol of the receiving side, and the channel parameter.

Exemplarily, from the modulation data $XPW = [X_{PW}^{P=1}, X_{PW}^{P=2}]'$ of the data pilot symbol of the transmitting side with the dimension 2*72, through the radio fading channel, received data pilot symbol data $Y_{PW} = Y_{PW}^{R=1,P=1}, Y_{PW}^{R=2,P=1}, Y_{PW}^{R=1,P=2}, Y_{PW}^{R=2,P=2}$ of the receiving side with the dimension 4*72 is obtained. Then, real-number conversion processing and data rearrangement processing are performed on the data $X_{PW}$ and the data $Y_{PW}$, with N=2 and the dimension 8*36*4. For example,

$$\begin{bmatrix} \mathrm{Re} \ (Y_{PW}^{SUB=1 \,,\, R=1 \,,\, P=1}) \,,\mathrm{Im} \ (Y_{PW}^{SUB=1 \,,\, R=1 \,,\, P=1}) \,,\mathrm{Re} \left(\hat{X}_{PW}^{SUB=1 \,,\, R=1 \,,\, P=1}\right) \,, \ \mathrm{Im} \left(\hat{X}_{PW}^{SUB=1 \,,\, R=1 \,,\, P=1}\right) \\ \mathrm{Re} \ (Y_{PW}^{SUB=1 \,,\, R=2 \,,\, P=1}) \,,\mathrm{Im} \ (Y_{PW}^{SUB=1 \,,\, R=2 \,,\, P=1}) \,,\mathrm{Re} \left(\hat{X}_{PW}^{SUB=1 \,,\, R=2 \,,\, P=1}\right) \,, \ \mathrm{Im} \left(\hat{X}_{PW}^{SUB=1 \,,\, R=2 \,,\, P=1}\right) \\ \mathrm{Re} \ (Y_{PW}^{SUB=1 \,,\, R=1 \,,\, P=2}) \,,\mathrm{Im} \ (Y_{PW}^{SUB=1 \,,\, R=1 \,,\, P=2}) \,,\mathrm{Re} \left(\hat{X}_{PW}^{SUB=1 \,,\, R=1 \,,\, P=2}\right) \,, \ \mathrm{Im} \left(\hat{X}_{PW}^{SUB=1 \,,\, R=1 \,,\, P=2}\right) \\ \mathrm{Re} \ (Y_{PW}^{SUB=1 \,,\, R=2 \,,\, P=2}) \,,\mathrm{Im} \ (Y_{PW}^{SUB=1 \,,\, R=2 \,,\, P=2}) \,,\mathrm{Re} \left(\hat{X}_{PW}^{SUB=1 \,,\, R=2 \,,\, P=2}\right) \,, \ \mathrm{Im} \left(\hat{X}_{PW}^{SUB=1 \,,\, R=2 \,,\, P=2}\right) \\ \mathrm{Re} \ (Y_{PW}^{SUB=2 \,,\, R=1 \,,\, P=1}) \,,\mathrm{Im} \ (Y_{PW}^{SUB=2 \,,\, R=1 \,,\, P=1}) \,,\mathrm{Re} \left(\hat{X}_{PW}^{SUB=2 \,,\, R=1 \,,\, P=1}\right) \,, \ \mathrm{Im} \left(\hat{X}_{PW}^{SUB=2 \,,\, R=1 \,,\, P=1}\right) \\ \mathrm{Re} \ (Y_{PW}^{SUB=2 \,,\, R=2 \,,\, P=1}) \,,\mathrm{Im} \ (Y_{PW}^{SUB=2 \,,\, R=2 \,,\, P=1}) \,,\mathrm{Re} \left(\hat{X}_{PW}^{SUB=2 \,,\, R=2 \,,\, P=1}\right) \,, \ \mathrm{Im} \left(\hat{X}_{PW}^{SUB=2 \,,\, R=2 \,,\, P=1}\right) \\ \mathrm{Re} \ (Y_{PW}^{SUB=2 \,,\, R=1 \,,\, P=2}) \,,\mathrm{Im} \ (Y_{PW}^{SUB=2 \,,\, R=1 \,,\, P=2}) \,,\mathrm{Re} \left(\hat{X}_{PW}^{SUB=2 \,,\, R=1 \,,\, P=2}\right) \,, \ \mathrm{Im} \left(\hat{X}_{PW}^{SUB=2 \,,\, R=1 \,,\, P=2}\right) \\ \mathrm{Re} \ (Y_{PW}^{SUB=2 \,,\, R=2 \,,\, P=2}) \,,\mathrm{Im} \ (Y_{PW}^{SUB=2 \,,\, R=2 \,,\, P=2}) \,,\mathrm{Re} \left(\hat{X}_{PW}^{SUB=2 \,,\, R=2 \,,\, P=2}\right) \,, \ \mathrm{Im} \left(\hat{X}_{PW}^{SUB=2 \,,\, R=2 \,,\, P=2}\right) \end{bmatrix}.$$

Moreover, the channel parameter $H_{pw} = [H_{pw}^{R=1,P=1}, H_{pw}^{R=2,P=1}, H_{pw}^{R=1,P=2}, H_{pw}^{R=2,P=2}]$ with the dimension 4*72 is acquired to perform real-number conversion processing and data rearrangement processing, with N=2, to obtain $H_{,pw}$.

Thus, 8*36*2 real-number arrays $H_{,pw}$ are taken as the label of the training sample, i.e., the second sample. Then, the sub-model for channel estimation may be trained based on the obtained second sample and label.

$$H_{,pw} = \begin{bmatrix} \mathrm{Re} \ (H_{NN}^{SUB=1 \,,\, R=1 \,,\, P=1}), & \mathrm{Im} \ (H_{NN}^{SUB=1 \,,\, R=1 \,,\, P=1}) \\ \mathrm{Re} \ (H_{NN}^{SUB=1 \,,\, R=2 \,,\, P=1}), & \mathrm{Im} \ (H_{PW}^{SUB=1 \,,\, R=2 \,,\, P=1}) \\ \mathrm{Re} \ (H_{NN}^{SUB=1 \,,\, R=1 \,,\, P=2}), & \mathrm{Im} \ (H_{PW}^{SUB=1 \,,\, R=1 \,,\, P=2}) \\ \mathrm{Re} \ (H_{NN}^{SUB=1 \,,\, R=2 \,,\, P=2}), & \mathrm{Im} \ (H_{PW}^{SUB=1 \,,\, R=2 \,,\, P=2}) \\ \mathrm{Re} \ (H_{NN}^{SUB=2 \,,\, R=1 \,,\, P=1}), & \mathrm{Im} \ (H_{PW}^{SUB=2 \,,\, R=1 \,,\, P=1}) \\ \mathrm{Re} \ (H_{NN}^{SUB=2 \,,\, R=2 \,,\, P=1}), & \mathrm{Im} \ (H_{PW}^{SUB=2 \,,\, R=2 \,,\, P=1}) \\ \mathrm{Re} \ (H_{NN}^{SUB=2 \,,\, R=1 \,,\, P=2}), & \mathrm{Im} \ (H_{PW}^{SUB=2 \,,\, R=1 \,,\, P=2}) \\ \mathrm{Re} \ (H_{NN}^{SUB=2 \,,\, R=2 \,,\, P=2}), & \mathrm{Im} \ (H_{PW}^{SUB=2 \,,\, R=2 \,,\, P=2}) \end{bmatrix}$$

In S302: the third real-number array is input to the sub-model for channel estimation to obtain the channel estimation parameter.

Exemplarily, as shown in FIG. 7, the receiving side may input the third real-number array $\mathrm{Net}_{2,in}$ to the channel estimation neural network Net2 of the sub-model for channel estimation, and may obtain output data (i.e., the channel estimation parameter $\hat{H}_{Data}$) of the channel estimation neural network Net2 of the sub-model for channel estimation.

Taking the communication scenario of the above Example 1 as an example, furthermore, the receiving side may input the third real-number array $\mathrm{Net}_{2,in}$ obtained in the above step 301 to the neural network Net2 of the sub-model for channel estimation, and through online detection of the neural network Net2 of the sub-model for channel estimation, may obtain the output of the neural network Net2, for example, the following $\mathrm{Net}_{2,Out}$, i.e., the channel estimation parameter $\hat{H}_{NN}$.

$$\mathrm{Net}_{2,Out} = \begin{bmatrix} \mathrm{Re} \left(\hat{H}_{NN}^{SUB=1 \,,\, R=1}\right), & \mathrm{Im} \left(\hat{H}_{NN}^{SUB=1 \,,\, R=1}\right) \\ \mathrm{Re} \left(\hat{H}_{NN}^{SUB=2 \,,\, R=1}\right), & \mathrm{Im} \left(\hat{H}_{NN}^{SUB=2 \,,\, R=1}\right) \\ \mathrm{Re} \left(\hat{H}_{NN}^{SUB=3 \,,\, R=1}\right), & \mathrm{Im} \left(\hat{H}_{NN}^{SUB=3 \,,\, R=1}\right) \\ \mathrm{Re} \left(\hat{H}_{NN}^{SUB=4 \,,\, R=1}\right), & \mathrm{Im} \left(\hat{H}_{NN}^{SUB=4 \,,\, R=1}\right) \end{bmatrix}$$

Alternatively, taking the communication scenario of the above Example 2 as an example, the receiving side may input the third real-number array $\mathrm{Net}_{2,in}$ obtained in the above step 301 to the neural network Net2 of the sub-model for channel estimation, and through online detection of the neural network Net2 of the sub-model for channel estimation, may obtain the output of the neural network Net2, for example, the following $\mathrm{Net}_{2,Out}$:

$$\text{Net}_{2,\text{Out}} = \begin{bmatrix} \text{Re}\left(\hat{H}_{NN}^{SUB=1 \,,\, R=1 \,,\, P=1}\right), & \text{Im}\left(\hat{H}_{NN}^{SUB=1 \,,\, R=1 \,,\, P=1}\right) \\ \text{Re}\left(\hat{H}_{NN}^{SUB=1 \,,\, R=2 \,,\, P=1}\right), & \text{Im}\left(\hat{H}_{PW}^{SUB=1 \,,\, R=2 \,,\, P=1}\right) \\ \text{Re}\left(\hat{H}_{NN}^{SUB=1 \,,\, R=1 \,,\, P=2}\right), & \text{Im}\left(\hat{H}_{PW}^{SUB=1 \,,\, R=1 \,,\, P=2}\right) \\ \text{Re}\left(\hat{H}_{NN}^{SUB=1 \,,\, R=2 \,,\, P=2}\right), & \text{Im}\left(\hat{H}_{PW}^{SUB=1 \,,\, R=2 \,,\, P=2}\right) \\ \text{Re}\left(\hat{H}_{NN}^{SUB=2 \,,\, R=1 \,,\, P=1}\right), & \text{Im}\left(\hat{H}_{PW}^{SUB=2 \,,\, R=1 \,,\, P=1}\right) \\ \text{Re}\left(\hat{H}_{NN}^{SUB=2 \,,\, R=2 \,,\, P=1}\right), & \text{Im}\left(\hat{H}_{PW}^{SUB=2 \,,\, R=2 \,,\, P=1}\right) \\ \text{Re}\left(\hat{H}_{NN}^{SUB=2 \,,\, R=1 \,,\, P=2}\right), & \text{Im}\left(\hat{H}_{PW}^{SUB=2 \,,\, R=1 \,,\, P=2}\right) \\ \text{Re}\left(\hat{H}_{NN}^{SUB=2 \,,\, R=2 \,,\, P=2}\right), & \text{Im}\left(\hat{H}_{PW}^{SUB=2 \,,\, R=2 \,,\, P=2}\right) \end{bmatrix}.$$

That is, the channel estimation parameter $\hat{H}_{NN}$ has the dimension of 8*72*2, including 2 subbands, 2 reception antennas, and 2 antenna ports.

Based on the above embodiments, channel estimation may be performed based on the received data pilot symbol and the predicted data pilot symbol data, without transmitting a pilot symbol, which may reduce transmission overhead and improve the signal detection performance of the receiver.

In some embodiments, as shown in FIG. 10, the process where the receiving side processes the first communication signal and the channel estimation parameter based on the sub-model for channel equalization to obtain the second communication signal, may include the following steps S401 and S402.

In S401: preprocessing is performed based on the first communication signal and the channel estimation parameter to determine a fourth real number array.

It should be noted that the receiving side may construct input data of the sub-model for channel equalization, for example, a channel equalization neural network Net3, based on the first communication signal and the channel estimation parameter determined above. Since the structure of the sub-model for channel equalization is generally a real-number neural network, the receiving side may first perform real-number conversion processing on the first communication signal and the channel estimation parameter to obtain the fourth real number array, so that the fourth real number array may be input into the sub-model for channel equalization for subsequent data processing.

In some embodiments, a fourth initial real number array may be determined according to the first communication signal and the channel estimation parameter.

An element in the fourth initial real number array is determined based on a value of a real part of the first communication signal, a value of an imaginary part of the first communication signal, a value of a real part of the channel estimation parameter, and a value of an imaginary part of the channel estimation parameter.

Exemplarily, the receiving side may form a real-number array, i.e., the fourth initial real number array $[\text{Re}(Y_{\text{Data}}), \text{Im}(Y_{\text{Data}}), \text{Re}(\hat{H}_{NN}), \text{Im}(\hat{H}_{NN})]$, based on the reception data $Y_{\text{Data}}$ and the channel estimation parameter $\hat{H}_{NN}$. $\text{Re}(\ )$ represents an operation for taking the real part, and $\text{Im}(\ )$ represents an operation for taking the imaginary part.

Furthermore, a size of a third subband, a number of third subbands, and a number of elements of the fourth initial real number array are taken as dimension numbers of three dimensions of a real-number array, respectively, and data carried in the first communication signal is rearranged based on the dimension numbers, to obtain the fourth real number array. In some embodiments, the size of the third subband is determined based on a processing granularity of the sub-model for channel equalization.

For example, the size of the processing granularity of the neural network model (the sub-model for channel estimation), X REs, may be defined as a processing subband, and data rearrangement with the processing subband as the granularity is performed on data symbols $Y_{\text{Data}}^{\text{ka}}$ received on all antennas, so as to be rearranged into reception data of N subbands, for example, to obtain the fourth real number array $\text{Net}_{3,\text{in}} = [N \times X \times 4]_{\text{ka}}$.

In an example, taking the scenario in the above Example 1 as an example, that is, in the communication system without a pilot in a low-speed scenario, the transmission is performed by utilizing an SISO technology, with T=1 physical transmission antenna and R=1 physical reception antenna, etc., which will not be repeated. Data symbols $Y_{\text{Data}}=\{Y_{\text{Data},1}, Y_{\text{Data},2}, ..., Y_{\text{Data},13}\}$, totaling 13 symbols, may be extracted from the received frequency-domain signal Y. Each symbol has 288 REs, with the dimension 13*288.

Data $Y_{\text{Data},\text{sym}}$ of each symbol may be extracted based on the symbol order, sym=1, 2, ...13, and data $Y_{\text{Data},\text{sym}}$ of the current symbol and the channel estimation parameter $\hat{H}_{NN}$ form a fourth initial real number array, for example, $[\text{Re}(Y_{\text{Data},\text{sym}}), \text{Im}(Y_{\text{Data},\text{sym}}), \text{Re}(\hat{H}_{NN}), \text{Im}(\hat{H}_{NN})]$. In a case where the frequency-domain data is divided into N=4 subbands at the processing granularity X=72 of the sub-model for channel equalization (i.e., the neural network model), data rearrangement with the processing subband as the granularity is performed on data symbols $Y_{\text{Data}}$ received on all antennas, so as to be rearranged into reception data $\text{Net}_{3,\text{in}}$ of N=4 subbands, i.e., the fourth real number array with the dimension 4*72*2.

$$
\text{Net}_{2,\text{in}} = \begin{bmatrix} \text{Re}\left(Y_{\text{Data,sym}}^{\text{SUB}=1\,,\,R=1}\right), & \text{Im}\left(Y_{\text{Data,sym}}^{\text{SUB}=1\,,\,R=1}\right), & \text{Re}\left(\hat{H}_{\text{NN}}^{\text{SUB}=1\,,\,R=1}\right), & \text{Im}\left(\hat{H}_{\text{NN}}^{\text{SUB}=1\,,\,R=1}\right) \\ \text{Re}\left(Y_{\text{Data,sym}}^{\text{SUB}=2\,,\,R=1}\right), & \text{Im}\left(Y_{\text{Data,sym}}^{\text{SUB}=2\,,\,R=1}\right), & \text{Re}\left(\hat{H}_{\text{NN}}^{\text{SUB}=2\,,\,R=1}\right), & \text{Im}\left(\hat{H}_{\text{NN}}^{\text{SUB}=2\,,\,R=1}\right) \\ \text{Re}\left(Y_{\text{Data,sym}}^{\text{SUB}=3\,,\,R=1}\right), & \text{Im}\left(Y_{\text{Data,sym}}^{\text{SUB}=3\,,\,R=1}\right), & \text{Re}\left(\hat{H}_{\text{NN}}^{\text{SUB}=3\,,\,R=1}\right), & \text{Im}\left(\hat{H}_{\text{NN}}^{\text{SUB}=3\,,\,R=1}\right) \\ \text{Re}\left(Y_{\text{Data,sym}}^{\text{SUB}=4\,,\,R=1}\right), & \text{Im}\left(Y_{\text{Data,sym}}^{\text{SUB}=4\,,\,R=1}\right), & \text{Re}\left(\hat{H}_{\text{NN}}^{\text{SUB}=4\,,\,R=1}\right), & \text{Im}\left(\hat{H}_{\text{NN}}^{\text{SUB}=4\,,\,R=1}\right) \end{bmatrix}
$$

In addition, the training sample of the sub-model for channel equalization provided in the above embodiments, i.e., the third sample, may be determined based on the data symbol received by the receiving side and the channel estimation parameter.

Exemplarily, from modulation data $X_{\text{Data}}$ of the transmitting side with the dimension 288*1, through the radio fading channel, the received data symbol data $Y_{\text{Data}}$ of the receiving side with the dimension 288*1 , and an ideal channel $H_{\text{Data}}$ are obtained. Then, real-number conversion processing and data rearrangement processing are performed on the data $X_{\text{Data}}$ and the data $Y_{\text{Data}}$ to obtain 4*72 real-number arrays. A single real-number array is composed of [Re($Y_{\text{Data}}$), Im($Y_{\text{Data}}$), Re($H_{\text{Data}}$), Im($H_{\text{Data}}$], which may be taken as the training sample of the sub-model for channel equalization, i.e., the third sample. In addition, modulation data $X_{\text{Data}}$ of the transmitting side with the dimension 288*1 may also be acquired to perform real-number conversion processing and data rearrangement processing, so as to obtain 4*72 real-number arrays, where the j-th real-number array may be $X_{\text{Data,j}} = [\text{Re}\left(X_{\text{data}}\right)\,,\,\text{Im}\left(X_{\text{data}}\right)]$, which may be taken as the label of the third sample. Then, the sub-model for channel equalization may be trained based on the obtained third sample and label.

In S402: the fourth real number array is input into the sub-model for channel equalization to obtain the second communication signal.

The second communication signal may be understood as an estimated value of the transmission data.

Exemplarily, as shown in FIG. 7, the receiving side may input the fourth real number array $\text{Net}_{3,\text{in}}$ into the sub-model for channel equalization Net3, and may obtain the output data of the channel estimation neural network Net3 of the sub-model for channel equalization, that is, the second communication signal $\hat{X}_{\text{Data}}$.

Taking the communication scenario of the above Example 1 as an example, furthermore, the receiving side may input the fourth real number array $\text{Net}_{3,\text{in}}$ obtained in the above step 401 into the neural network Net3 of the sub-model for channel equalization, and through online detection by the neural network Net3 of the sub-model for channel equalization, it may obtain the output of the neural network Net3, for example, the following $\text{Net}_{3,\text{Out}}$, i.e., the second communication signal $\hat{X}_{\text{Data}}$ corresponding to the data symbol.

$$
\text{Net}_{2,\text{Out}} = \begin{bmatrix} \text{Re}\left(\hat{X}_{\text{Data},\text{sym}}^{\text{SUB}=1\,,\,R=1}\right), & \text{Im}\left(\hat{X}_{\text{Data},\text{sym}}^{\text{SUB}=1\,,\,R=1}\right) \\ \text{Re}\left(\hat{X}_{\text{Data},\text{sym}}^{\text{SUB}=2\,,\,R=1}\right), & \text{Im}\left(\hat{X}_{\text{Data},\text{sym}}^{\text{SUB}=2\,,\,R=1}\right) \\ \text{Re}\left(\hat{X}_{\text{Data},\text{sym}}^{\text{SUB}=3\,,\,R=1}\right), & \text{Im}\left(\hat{X}_{\text{Data},\text{sym}}^{\text{SUB}=3\,,\,R=1}\right) \\ \text{Re}\left(\hat{X}_{\text{Data},\text{sym}}^{\text{SUB}=4\,,\,R=1}\right), & \text{Im}\left(\hat{X}_{\text{Data},\text{sym}}^{\text{SUB}=4\,,\,R=1}\right) \end{bmatrix}
$$

In some embodiments, the above processing process may be performed on each symbol, to obtain the estimated value of the transmission data obtained after the data calculation for 13 symbols is completed, that is, the second communication signal $\hat{X}_{\text{Data}} = \{\hat{X}_{\text{Data},1}, \hat{X}_{\text{Data},2}\,,\,...\,,\,\hat{X}_{\text{Data},13}\}$.

In some embodiments, since the second communication signal $\hat{X}_{\text{Data}}$ is a real-number array, complexification processing may also be performed on the second communication signal, to obtain the processed second communication signal $\hat{X}_{\text{Data}}^{\text{sym}}$.

$\hat{X}_{\text{Data}}$ may also be represented as

$$
\hat{X}_{\text{Data}} = [\hat{X}_{\text{Data},1}^{\text{Real}}\,,\,\hat{X}_{\text{Data},1}^{\text{Imag}}\,,\,...\,,\,\hat{X}_{\text{Data},i}^{\text{Real}}\,,\,\hat{X}_{\text{Data},i}^{\text{Imag}}\,,\,...\,,\,\hat{X}_{\text{Data},13}^{\text{Real}}\,,\,\hat{X}_{\text{Data},13}^{\text{Imag}}]\,.
$$

Complexification processing is performed on $\hat{X}_{\text{Data}}$ to obtain the processed second communication signal

$$\hat{X}_{Data}^{sym} = [complex(X_{Data,1}^{Real} , X_{Data,1}^{Imag}) , ... , complex(X_{Data,i}^{Real} , X_{Data,i}^{Imag}) , ... , complex( X_{Data,13}^{Real} , X_{Data,13}^{Imag})]$$

In some embodiments, the subsequent demodulation and decoding processing may also be performed on the complex-valued data $\hat{X}_{Data}^{sym}$, which will not be repeated here.

Based on the above embodiments, the estimated value of the transmission data may be determined through the model that is trained completely, based on the received data symbol and the channel estimation parameter, which may improve the signal detection performance of the receiver.

The above mainly introduces the solutions provided in the present disclosure from the perspective of interactions between various nodes. It can be understood that various nodes (for example, apparatus or device) include corresponding hardware structures and/or software modules to implement the aforementioned functions. Those skilled in the art should easily realize that, in conjunction with the exemplary algorithm steps described in the embodiments disclosed herein, the present disclosure can be implemented in the form of hardware or a combination of hardware and computer software. Whether a certain function is performed via the hardware or the computer software-driven hardware depends on the specific application and restrictive conditions of the design of the technical solutions. Professional technicians may use different methods to implement the described functions for each specific application, but such implementation should not be considered beyond the scope of the present disclosure.

The embodiments of the present disclosure may divide a communication apparatus into functional modules according to the method embodiments described above, and for example, each functional module may be divided corresponding to each function, or two or more functions may be integrated in a functional module. The above integrated modules may be implemented in the form of hardware or implemented in the form of software. It should be noted that the division of modules in the embodiments of the present disclosure is illustrative, and is only a division of logical functions, and there may be other division methods in actual implementations. The following description takes an example where each functional module is divided corresponding to each function.

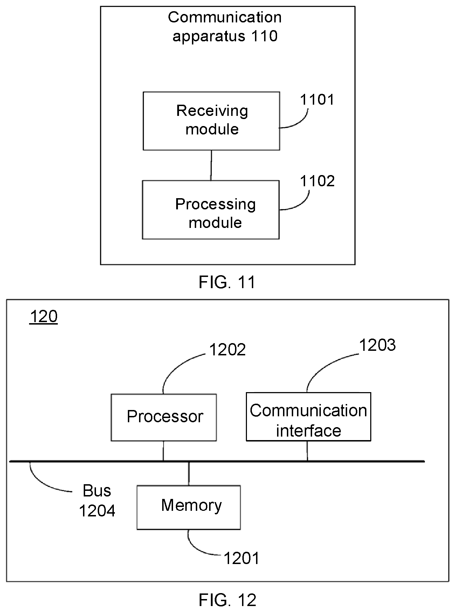

FIG. 11 shows a composition schematic diagram of a communication apparatus provided in the embodiments of the present disclosure. As shown in FIG. 11, the communication apparatus 110 includes a receiving module 1101 and a processing module 1102.

In some embodiments, the receiving module 1101 may be configured to receive a first communication signal without a pilot symbol. The processing module 1102 is configured to process the first communication signal through a first model to obtain a second communication signal, and perform signal parsing processing on the second communication signal to obtain communication data.

In some embodiments, the first model includes a sub-model for pre-demodulation, a sub-model for channel estimation, and a sub-model for channel equalization.

In some embodiments, the sub-model of the first model is constructed based on a convolutional neural network, a residual neural network, or a residual neural network with an attention mechanism.

In some embodiments, the processing module 1102 is specifically configured to: process a first symbol in the first communication signal based on the sub-model for pre-demodulation, to obtain a second symbol; process the first symbol and the second symbol based on the sub-model for channel estimation, to obtain a channel estimation parameter; and process the first communication signal and the channel estimation parameter based on the sub-model for channel equalization, to obtain the second communication signal.

In some embodiments, the first symbol is used to carry data and for channel estimation.

In some embodiments, the first symbol is a first received symbol in the first communication signal.

In some embodiments, the processing module 1102 is specifically configured to: determine a first real-number array based on the first symbol; input the first real-number array into the sub-model for pre-demodulation to obtain a second real-number array; and perform modulation processing on the second real-number array to obtain the second symbol.

In some embodiments, the processing module 1102 is specifically configured to: determine a first initial real-number array according to the first symbol; where an element in the first initial real-number array is determined based on a value of a real part of the first symbol and a value of an imaginary part of the first symbol; take a size of a first subband, a number of first subbands, and a number of elements of the first initial real-number array as dimension numbers of three dimensions of a real-number array, respectively, and rearrange data carried in the first symbol based on the dimension numbers, to obtain the first real-number array.

In some embodiments, the size of the first subband is determined based on a processing granularity of the sub-model for pre-demodulation.

In some embodiments, the processing module 1102 is specifically configured to: determine a third real-number array based on the first symbol and the second symbol; and input the third real-number array into the sub-model for channel estimation to obtain the channel estimation parameter.

In some embodiments, the processing module 1102 is specifically configured to: determine a third initial real-number array according to the first symbol and the second symbol; where an element in the third initial real-number array is determined based on a value of a real part of the first symbol, a value of an imaginary part of the first symbol, a value of a real part of the second symbol, and a value of an imaginary part of the second symbol; and take a size of a second subband, a number of second subbands, and a number of elements of the third initial real-number array as dimension numbers of three dimensions of a real-number array, respectively, and rearrange data carried in the first symbol based on the dimension numbers, to obtain the third real-number array.

In some embodiments, the size of the second subband is determined based on a processing granularity of the sub-model for channel estimation.

In some embodiments, the processing module 1102 is specifically configured to: preprocess the first communication signal and the channel estimation parameter to obtain a fourth real-number array; and input the fourth real-number array into the sub-model for channel equalization to obtain the second communication signal.

In some embodiments, the processing module 1102 is specifically configured to: determine a fourth initial real-number array according to the first communication signal and the channel estimation parameter; where an element in the fourth initial real-number array is determined based on a value of a real part of the first communication signal, a value of an imaginary part of the first communication signal, a value of a real part of the channel estimation parameter, and a value of an imaginary part of the channel estimation parameter; and take a size of a third subband, a number of third subbands, and a number of elements of the fourth initial real-number array as dimension numbers of three dimensions of a real-number array, respectively, and rearrange data carried in the first communication signal based on the dimension numbers, to obtain the fourth real-number array.

In some embodiments, the size of the third subband is determined based on a processing granularity of the sub-model for channel equalization.

In some embodiments, the sub-model for pre-demodulation is obtained by training based on a first sample set. The first sample set includes a plurality of first samples and labels corresponding to the plurality of first samples respectively, a first sample of the plurality of first samples is a first symbol, and a label corresponding to the first sample is a third symbol corresponding to the first symbol.

In some embodiments, the sub-model for channel estimation is obtained by training based on a second sample set. The second sample set includes a plurality of second samples and labels corresponding to the plurality of second samples respectively, a second sample of the plurality of second samples is a first symbol and a third symbol corresponding to the first symbol, and a label corresponding to the second sample is a channel actual measurement parameter.

In some embodiments, in response that the channel actual measurement parameter includes channel parameters with multi-antenna dimensions, the channel parameters with multi-antenna dimensions are arranged based on a preset order of the sub-model for channel estimation, and channel estimation parameters output by the sub-model for channel estimation are also arranged based on the preset order.

In some embodiments, the sub-model for channel estimation is obtained by training based on a third sample set; the third sample set includes a plurality of third samples and labels corresponding to the plurality of third samples respectively, a third sample of the plurality of third samples is the first communication signal and a channel estimation parameter output by the sub-model for channel estimation, and a label corresponding to the third sample is a third communication signal corresponding to the first communication signal.

In some embodiments, the signal parsing processing includes complexification processing, demodulation processing, and decoding processing.

For more detailed descriptions of the above receiving module 1101 and processing module 1102, more detailed descriptions of technical features therein, and descriptions of beneficial effects, etc., reference may be made to the above corresponding method embodiment parts, which will not be repeated here.

It should be noted that the modules in FIG. 11 may also be referred to as units, and for example, the processing module may be referred to as a processing unit. In addition, in the embodiments shown in FIG. 11, the names of the various modules may not be the names shown in the figures, and for example, the receiving module may also be referred to as a communication module.

If each unit in FIG. 11 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the existing technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of media capable of storing program codes, such as a U disk (USB disk), a mobile hard disk, a read-only memory (ROM), a random access memory (RAM), a magnetic disk, or an optical disk, etc.

In a case where functions of the above integrated modules are implemented in a form of hardware, the embodiments of the present disclosure provide a structural schematic diagram of a communication apparatus. As shown in FIG. 12, the communication apparatus 120 includes: a processor 1202, a communication interface 1203, and a bus 1204. Optionally, the communication apparatus 120 may further include a memory 1201.

The processor 1202 may implement or execute various illustrative logical blocks, modules and circuits described in conjunction with the contents of the present disclosure. The processor 1202 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the contents in the present disclosure. The processor 1202 may also be a combination capable of implementing computing functions, for example, including a combination of one or more microprocessors, or a combination of a digital signal processor (DSP) and a microprocessor.

The communication interface 1203 is configured to connect with other devices through a communication network. The communication network may be an Ethernet, a radio access network, a wireless local area network (WLAN), or the like.

The memory 1201 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As a possible implementation, the memory 1201 may exist independently of the processor 1202, and the memory 1201 may be connected to the processor 1202 through the bus 1204, for storing instructions or program codes. When calling and executing the instructions or the program codes stored in the memory 1201, the processor 1202 is capable of implementing the method provided in the embodiments of the present disclosure.

In another possible implementation, the memory 1201 may also be integrated with the processor 1202.

The bus 1204 may be an extended industry standard architecture (EISA) bus or the like. The bus 1204 may be classified into an address bus, a data bus, and a control bus, or the like. For the convenience of representation, only one thick line is used in FIG. 12 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer-readable storage medium ( e.g., the computer-readable storage medium includes a non-transitory computer readable storage medium). All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be a memory of the device or apparatus of any one of the aforementioned embodiments. The above-mentioned computer readable storage medium may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer-readable storage medium mentioned above may further include both an internal storage unit and an external storage device of the device or apparatus mentioned above. The computer-readable storage medium mentioned above is used to store the computer program mentioned above, and other programs and data required for the device or apparatus mentioned above. The computer-readable storage medium mentioned above may further be used to temporarily store data that has been output or is to be output.

The embodiments of the present disclosure further provide a computer program product, the computer product contains a computer program, the computer program product, when executed on a computer, causes the computer to perform any method in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents thereof within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be based on the protection scope of the claims.

## Claims

1.  A communication method, wherein the method is applied to a receiving side, and comprises:

    receiving a first communication signal without a pilot symbol;
    processing the first communication signal through a first model to obtain a second communication signal; and
    performing signal parsing processing on the second communication signal to obtain communication data.

2.  The method according to claim 1, wherein the first model comprises a sub-model for pre-demodulation, a sub-model for channel estimation, and a sub-model for channel equalization.

3.  The method according to claim 1, wherein the sub-model of the first model is constructed based on a convolutional neural network, a residual neural network, or a residual neural network with an attention mechanism.

4.  The method according to claim 2, wherein processing the first communication signal through the first model, comprises:

    processing a first symbol in the first communication signal based on the sub-model for pre-demodulation, to obtain a second symbol;
    processing the first symbol and the second symbol based on the sub-model for channel estimation, to obtain a channel estimation parameter; and
    processing the first communication signal and the channel estimation parameter based on the sub-model for channel equalization, to obtain the second communication signal.

5.  The method according to claim 4, wherein the first symbol is used to carry data and for channel estimation.

6.  The method according to claim 4, wherein processing the first symbol in the first communication signal based on the sub-model for pre-demodulation, comprises:

    determining a first real-number array based on the first symbol;
    inputting the first real-number array into the sub-model for pre-demodulation to obtain a second real-number array; and
    performing modulation processing on the second real-number array to obtain the second symbol.

7.  The method according to claim 6, wherein determining the first real-number array based on the first symbol, comprises:

    determining a first initial real-number array according to the first symbol; wherein an element in the first initial real-number array is determined based on a value of a real part of the first symbol and a value of an imaginary part of the first symbol;
    taking a size of a first subband, a number of first subbands, and a number of elements of the first initial real-number array as dimension numbers of three dimensions of a real-number array, respectively, and rearranging data carried in the first symbol based on the dimension numbers, to obtain the first real-number array.

8. The method according to claim 7, wherein the size of the first subband is determined based on a size of a processing subband of the sub-model for pre-demodulation.

9. The method according to claim 4, wherein processing the first symbol and the second symbol based on the sub-model for channel estimation, comprises:

   determining a third real-number array based on the first symbol and the second symbol; and
   inputting the third real-number array into the sub-model for channel estimation to obtain the channel estimation parameter.

10. The method according to claim 9, wherein determining the third real-number array based on the first symbol and the second symbol, comprises:

    determining a third initial real-number array according to the first symbol and the second symbol; wherein an element in the third initial real-number array is determined based on a value of a real part of the first symbol, a value of an imaginary part of the first symbol, a value of a real part of the second symbol, and a value of an imaginary part of the second symbol; and
    taking a size of a second subband, a number of second subbands, and a number of elements of the third initial real-number array as dimension numbers of three dimensions of a real-number array, respectively, and rearranging data carried in the first symbol based on the dimension numbers, to obtain the third real-number array.

11. The method according to claim 10, wherein the size of the second subband is determined based on a size of a processing subband of the sub-model for channel estimation.

12. The method according to claim 4, wherein processing the first communication signal and the channel estimation parameter based on the sub-model for channel equalization, comprises:

    preprocessing the first communication signal and the channel estimation parameter to obtain a fourth real-number array; and
    inputting the fourth real-number array into the sub-model for channel equalization to obtain the second communication signal.

13. The method according to claim 12, wherein preprocessing the first communication signal and the channel estimation parameter, comprises:

    determining a fourth initial real-number array according to the first communication signal and the channel estimation parameter; wherein an element in the fourth initial real-number array is determined based on a value of a real part of the first communication signal, a value of an imaginary part of the first communication signal, a value of a real part of the channel estimation parameter, and a value of an imaginary part of the channel estimation parameter; and
    taking a size of a third subband, a number of third subbands, and a number of elements of the fourth initial real-number array as dimension numbers of three dimensions of a real-number array, respectively, and rearranging data carried in the first communication signal based on the dimension numbers, to obtain the fourth real-number array.

14. The method according to claim 13, wherein the size of the third subband is determined based on a size of a processing subband of the sub-model for channel equalization.

15. The method according to claim 2, wherein the sub-model for pre-demodulation is obtained by training based on a first sample set; the first sample set comprises a plurality of first samples and labels corresponding to the plurality of first samples respectively, a first sample of the plurality of first samples is a first symbol, and a label corresponding to the first sample is a third symbol corresponding to the first symbol.

16. The method according to claim 2, wherein the sub-model for channel estimation is obtained by training based on a second sample set; the second sample set comprises a plurality of second samples and labels corresponding to the plurality of second samples respectively, a second sample of the plurality of second samples is a first symbol and a third symbol corresponding to the first symbol, and a label corresponding to the second sample is a channel actual measurement parameter.

17. The method according to claim 16, wherein in response that the channel actual measurement parameter comprises channel parameters with multi-antenna dimensions, the channel parameters with multi-antenna dimensions are arranged based on a preset order of the sub-model for channel estimation, and channel estimation parameters output by the sub-model for channel estimation are arranged based on the preset order.

18. The method according to claim 2, wherein the sub-model for channel estimation is obtained by training based on a third sample set; the third sample set comprises a plurality of third samples and labels corresponding to the plurality of third samples respectively, a third sample of the plurality of third samples is the first communication signal and a channel estimation parameter output by the sub-model for channel estimation, and a label corresponding to the third sample is a third communication signal corresponding to the first communication signal.

19. The method according to claim 1, wherein the signal parsing processing comprises complexification processing, demodulation processing, and decoding processing.

20. A communication apparatus, comprising: a memory and a processor; wherein the memory is coupled with the processor; the memory is configured to store instructions executable by the processor; and the processor, upon executing the instructions, performs the method according to any one of claims 1 to 19.

21. A computer-readable storage medium, wherein the computer-readable storage medium stores computer instructions, and the computer instructions, upon running on a communication apparatus, cause the communication apparatus to perform the method according to any one of claims 1 to 19.

FIG. 1

| Receive a first communication signal without a pilot symbol | S101 |

| Process the first communication signal by means of a first model to obtain a second communication signal | S102 |

| Perform signal parsing processing on the second communication signal to obtain communication data | S103 |

FIG. 2

FIG. 3

Transmit a bitstream → Encoding → Modulation → $\hat{X}_{PW}$ Layer mapping → IFFT → CP addition

$X_{bit}$ $X_{Data}$

Radio channel

**Receiver**

Receive a bitstream ← Decoding ← De-modulation ← $\hat{X}_{PW}$ | Channel equalization neural network Net3 | Channel estimation neural network Net2 | Pre-demodulation neural Network Net1 | $Y_{PW}$ FFT ← CP removal

$\hat{X}_{Data}$ $Y_{Data}$

**FIG. 4**

| Receive a first communication signal without a pilot symbol | S101 |

| Process a first symbol in the first communication signal based on the sub-model for pre-demodulation, to obtain a second symbol | S1021 |

| Process the first symbol and the second symbol based on the sub-model for channel estimation, to obtain a channel estimation parameter | S1022 |

S102

| Process the first communication signal and the channel estimation parameter based on the sub-model for channel equalization, to obtain the second communication signal | S1023 |

| Perform signal parsing processing on the second communication signal to obtain communication data | S103 |

**FIG. 5**

| Determine a first real-number array based on the first symbol | S201 |

| Input the first real-number array into the sub-model for pre-demodulation to obtain a second real-number array | S202 |

| Perform modulation processing on the second real-number array to obtain the second symbol | S203 |

**FIG. 6**

FIG. 7

Determine a third real-number array based on the first symbol and the second symbol ⟋ S301

Input the third real-number array to the sub-model for channel estimation to obtain the channel estimation parameter ⟋ S302

FIG. 8

Time/Symbol

Frequency /Subcarrier

⬭ Data pilot symbol layer 2

▦ Data symbol layer 1/2

▭ Data pilot symbol layer 1

FIG. 9

perform preprocessing based on the first communication signal and the channel estimation parameter to determine a fourth real number array ⟋ S401

input the fourth real number array into the sub-model for channel equalization to obtain the second communication signal ⟋ S402

FIG. 10

Communication
apparatus 110

Receiving
module 1101

Processing
module 1102

FIG. 11

120

Processor 1202

Communication
interface 1203

Bus
1204

Memory 1201

FIG. 12

## INTERNATIONAL SEARCH REPORT

| International application No. |
| --- |
| **PCT/CN2024/086758** |

| A. | CLASSIFICATION OF SUBJECT MATTER |
| --- | --- |

H04L25/02(2006.01)i

According to International Patent Classification (IPC) or to both national classification and IPC

| B. | FIELDS SEARCHED |
| --- | --- |

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXTC, VEN, IEEE, CNKI: 不插入, 不用, 导频, 估计, 节省, 节约, 解调, 均衡, 开销, 免, 模型, 去, 省, 无, 信道, 实数, 维度, 实部, 虚部, channel, less, model, need, no, overhead, pilot, estimat+, reduc+, equalizat+, sav+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 108833313 A (BEIJING UNIVERSITY OF POSTS AND TELECOMMUNICATIONS) 16 November 2018 (2018-11-16) description, paragraphs [0076]-[0199] | 1-21 |
| A | CN 107359899 A (SUZHOU SOUNDTECH OCEANIC INSTRUMENT LTD.) 17 November 2017 (2017-11-17) entire document | 1-21 |
| A | CN 114764610 A (HUAWEI TECHNOLOGIES CO., LTD.) 19 July 2022 (2022-07-19) entire document | 1-21 |
| A | WO 2022117194 A1 (TELEFONAKTIEBOLAGET LM ERICSSON (PUBL)) 09 June 2022 (2022-06-09) entire document | 1-21 |
| A | WO 2023041143 A1 (TELEFONAKTIEBOLAGET LM ERICSSON (PUBL)) 23 March 2023 (2023-03-23) entire document | 1-21 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 July 2024** | **24 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/086758** |

| C. | DOCUMENTS CONSIDERED TO BE RELEVANT | |
|---|---|---|
| Category* | Citation of document, with indication, where appropriate, of the relevant passages | Relevant to claim No. |
| A | ZTE. "Channel Estimation Error Modeling for NOMA Receiver" *R1-1805844, 3GPP TSG RAN WG1 Meeting #93*, 25 May 2018 (2018-05-25), pages 1-3 | 1-21 |

Form PCT/ISA/210 (second sheet) (July 2022)

**INTERNATIONAL SEARCH REPORT**
Information on patent family members

International application No.

**PCT/CN2024/086758**

| Patent document<br>cited in search report | | | Publication date<br>(day/month/year) | Patent family member(s) | | | Publication date<br>(day/month/year) |
|---|---|---|---|---|---|---|---|
| CN | 108833313 | A | 16 November 2018 | None | | | |
| CN | 107359899 | A | 17 November 2017 | None | | | |
| CN | 114764610 | A | 19 July 2022 | WO | 2022151900 | A1 | 21 July 2022 |
| | | | | EP | 4270824 | A1 | 01 November 2023 |
| | | | | US | 2023362039 | A1 | 09 November 2023 |
| WO | 2022117194 | A1 | 09 June 2022 | US | 2024048410 | A1 | 08 February 2024 |
| | | | | EP | 4256717 | A1 | 11 October 2023 |
| WO | 2023041143 | A1 | 23 March 2023 | WO | 2023041202 | A1 | 23 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311435559